# EUROPÄISCHE PATENTSCHRIFT

(11) **EP 3 773 053 B1**
(45) Veröffentlichungstag und Bekanntmachung des Hinweises auf die Patenterteilung: **23.08.2023**
(21) Anmeldenummer: 19715056.8
(22) Anmeldetag: 29.03.2019
(51) Int. Cl.: A44B 11/00, F16B 7/04, F16B 21/04, A44B 11/25, A01K 27/00, F16B 1/00

(54) **VERSCHLUSSVORRICHTUNG ZUM LÖSBAREN VERBINDEN EINES ERSTEN TEILS MIT EINEM ZWEITEN TEIL**
CLOSING DEVICE FOR RELEASABLY CONNECTING A FIRST PART TO A SECOND PART
DISPOSITIF DE VERROUILLAGE POUR LA LIAISON SÉPARABLE ENTRE UNE PREMIÈRE PIÈCE ET UNE DEUXIÈME PIÈCE

(30) Priorität: 05.04.2018 DE 202018101841 U; 05.04.2018 DE 102018108011; 06.08.2018 DE 202018104505 U; 18.01.2019 DE 102019200658
(43) Veröffentlichungstag der Anmeldung: 17.02.2021
(73) Patentinhaber: Goleygo GmbH, 50670 Köln (DE)
(72) Erfinder: GLOZBACH DE CABARRUS, Jérôme, 50672 Köln (DE); LEY, Tim, 50672 Köln (DE)
(74) Vertreter: Freischem & Partner Patentanwälte mbB
(86) Internationale Anmeldenummer: PCT/EP2019/057994
(87) Internationale Veröffentlichungsnummer: WO 2019/192930

(56) Entgegenhaltungen:
- WO-A1-2017/116486
- WO-A2-2014/160916
- DE-A1-102007 041 613
- FR-A1- 2 065 741
- US-A1- 2004 107 547

## Beschreibung

Die Erfindung betrifft eine Verschlussvorrichtung zum lösbaren Verbinden eines ersten Teils mit einem zweiten Teil. Die Erfindung eignet sich insbesondere zum lösbaren Verbinden eines ersten Teils mit einem zweiten Teil aus dem Bereich des Sports, der Seefahrt, der Tierwelt und/oder der Industrie.

Eine Verschlussvorrichtung der vorgenannten Art findet in zahlreichen Bereichen des täglichen Lebens Anwendung. Wenn ein Gegenstand, beispielsweise ein Zubehörteil, ein Ausrüstungsgegenstand und/oder ein Werkzeug, nicht zur ständigen Befestigung an einer Person und/oder einem weiteren Gegenstand vorgesehen ist, wird nach einer einfachen und zuverlässigen Art der lösbaren Befestigung des Gegenstands an der Person und/oder dem weiteren Gegenstand gesucht. Insbesondere ist es wünschenswert, Ausrüstungsgegenstände beispielsweise an einem Fahrrad, an einem Kinderwagen, an einem Kraftfahrzeug und/oder an einem Rollstuhl lösbar zu befestigen. Auch bei Hundeleinen, bei der Takelage von Segelschiffen, bei der Befestigung von Segeln beim Surfen oder beim Kiten, bei der Befestigung von Gegenständen im Tauchsport, bei der Befestigung von Gegenständen im Jagdbereich, bei der Befestigung von Ausrüstungsgegenständen im militärischen Bereich, beim Pferdesport, beim Trekking, beim Fallschirmspringen und/oder allgemein in der Luft- und Raumfahrttechnik sind derartige Verschlussvorrichtungen wünschenswert. Auch Personen, die Werkzeuge mit sich führen, wünschen sich eine zuverlässige und lösbare Befestigung von Werkzeugen beispielsweise an Tragwesten. Auch sind beispielsweise in der Bautechnik derartige Verschlussvorrichtungen zur lösbaren Befestigung von Seilen zur Führung von Bauteilen wünschenswert.

Aus der DE 43 12 032 C2 ist eine Verschlussvorrichtung zum lösbaren Verbinden eines ersten Teils mit einem zweiten Teil bekannt. Die bekannte Verschlussvorrichtung weist eine erste Verschlusseinheit mit einem Zapfen auf, der mit einer Eingriffsaussparung an einer zweiten Verschlusseinheit in Eingriff gebracht werden kann. Beim Ansetzen drängt der Zapfen ein Sperrelement beiseite, das nach Herstellen des Eingriffs des Zapfens der ersten Verschlusseinheit mit der Eingriffsaussparung der zweiten Verschlusseinheit zurück in eine Grundstellung gelangt, in welcher der Eingriff des Zapfens mit der Eingriffsaussparung gesperrt ist. Zum Lösen des Zapfens aus der Eingriffsaussparung kann das Sperrelement betätigt werden, um den Zapfen freizugeben und aus der Eingriffsaussparung zu entfernen.

Aus der EP 2 833 754 B1 ist eine Verschlussvorrichtung zum lösbaren Verbinden zweier Teile mit einer ersten Verschlusseinheit und einer zweiten Verschlusseinheit bekannt. Die erste Verschlusseinheit ist zum Schließen der bekannten Verschlussvorrichtung an die zweite Verschlusseinheit ansetzbar und in einer Schließstellung an der zweiten Verschlusseinheit gehalten. Ferner weist die bekannte Verschlussvorrichtung einen ersten Eingriffsvorsprung mit Hinterschnitt der ersten Verschlusseinheit und einen zweiten Eingriffsvorsprung mit Hinterschnitt der zweiten Verschlusseinheit auf, wobei der erste Eingriffsvorsprung zum Schließen in eine Eingriffsrichtung mit dem zweiten Eingriffsvorsprung in Eingriff bringbar ist und in der Schließstellung formschlüssig mit dem zweiten Eingriffsvorsprung in Eingriff steht. Ferner weist die bekannte Verschlussvorrichtung ein an der zweiten Verschlusseinheit angeordnetes Sperrelement auf, das beim Ansetzen der ersten Verschlusseinheit an die zweite Verschlusseinheit durch Zusammenwirken mit der ersten Verschlusseinheit aus einer Grundstellung heraus bewegt wird, so dass der erste Eingriffsvorsprung in die Eingriffsrichtung mit dem zweiten Eingriffsvorsprung in Eingriff bringbar ist. Der erste Eingriffsvorsprung gelangt bei oder nach Herstellung des Eingriffs zurück in seine Grundstellung, um in der Grundstellung den formschlüssigen Eingriff des ersten Eingriffsvorsprungs mit dem zweiten Eingriffsvorsprung entgegen der Eingriffsrichtung zu sperren. Zwischen der ersten Verschlusseinheit und der zweiten Verschlusseinheit wirken magnetische Mittel, die ausgebildet sind, das Ansetzen der ersten Verschlusseinheit an die zweite Verschlusseinheit durch Bereitstellen einer magnetischen Anziehungskraft zu unterstützen.

Aus der DE 10 2007 041 613 A1 ist eine Kopplungseinrichtung mit einem kugelförmigen Endfitting bekannt, welches an einem Ende eines ersten Segments befestigt ist. Das kugelförmige Endfitting ist durch eine Aufnahmeöffnung in ein Aufnahmeteil einsetzbar, welches sich an einem zugeordneten Ende eines zweiten Segments befindet. Die Größe der Aufnahmeöffnung entspricht dabei im Wesentlichen der der Ausdehnung des Endfittings. Das Aufnahmeteil ist mit einem Schieber versehen, welcher den freien Querschnitt der Aufnahmeöffnung nach dem Einsetzen des Endfittings auf einen freien Querschnitt verkleinert, welcher geringer ist als die Ausdehnung des Endfittings. Das Endfitting wird hierdurch im Aufnahmeteil gehalten, so dass eine formschlüssige Verbindung zwischen dem ersten Segment und dem zweiten Segment hergestellt ist.

Aus der WO 2014/128508 A2 ist eine Verschlussvorrichtung zum lösbaren Verbinden eines Hundehalsbands mit einer Leine bekannt. Die bekannte Verschlussvorrichtung weist eine erste Verschlusseinheit mit einer longitudinalen Achse auf. Entlang der longitudinalen Achse erstreckt sich eine Klemmvorrichtung, die nach Art einer Wäscheklammer ausgebildet ist. Die Klemmvorrichtung weist an einem Ende Klemmelemente auf. Ferner weist die bekannte Verschlussvorrichtung eine zweite Verschlusseinheit mit einer umlaufenden Nut auf. In einer Schließstellung der bekannten Verschlussvorrichtung ist die zweite Verschlusseinheit in einer Aufnahmekammer der ersten Verschlusseinheit aufgenommen. In der Schließstellung greifen die Klemmelemente der Klemmvorrichtung in die umlaufende Nut der zweiten Verschlusseinheit ein und verhindern so ein Lösen der zweiten Verschlusseinheit von der ersten Verschlusseinheit.

Es hat sich herausgestellt, dass keine der bekannten Verschlussvorrichtungen ein Lösen des ersten Teils von dem zweiten Teil unter Volllast sicherstellt. Vielmehr ist es bei den bekannten Verschlussvorrichtungen gar nicht oder nur sehr schlecht möglich, das erste Teil vom zweiten Teil unter Volllast zu lösen. Ferner ist eine Relativbewegung des ersten Teils zum zweiten Teil in der Schließstellung der bekannten Verschlussvorrichtungen kaum oder gar nicht möglich.

Hinsichtlich des Standes der Technik wird zusätzlich auf die FR 2 065 741 A1, die WO 2017/116486 A1, die WO 2014/160916 A2 sowie die US 2004/0107547 A1 verwiesen.

Der Erfindung liegt daher die Aufgabe zugrunde, eine Verschlussvorrichtung zum lösbaren Verbinden eines ersten Teils mit einem zweiten Teil anzugeben, bei der ein Lösen des ersten Teils von dem zweiten Teil unter Volllast sichergestellt ist und/oder bei der eine Relativbewegung des ersten Teils zum zweiten Teil in der Schließstellung der Verschlussvorrichtung sichergestellt ist.

Erfindungsgemäß wird diese Aufgabe durch eine Verschlussvorrichtung mit den Merkmalen des Anspruchs 1 gelöst. Weitere Merkmale der Erfindung ergeben sich aus der nachfolgenden Beschreibung, den beigefügten Ansprüchen und/oder den beigefügten Zeichnungen.

Die erfindungsgemäße Verschlussvorrichtung ist zum lösbaren Verbinden eines ersten Teils mit einem zweiten Teil vorgesehen. Die erfindungsgemäße Verschlussvorrichtung ist in zahlreichen Bereichen des täglichen Lebens verwendbar. Wenn ein Gegenstand, beispielsweise ein Zubehörteil, ein Ausrüstungsgegenstand und/oder ein Werkzeug, nicht zur ständigen Befestigung an einer Person und/oder einem weiteren Gegenstand vorgesehen ist, wird mittels der erfindungsgemäßen Verschlussvorrichtung eine einfache und zuverlässige lösbare Befestigung des Gegenstands an der Person und/oder dem weiteren Gegenstand bereitgestellt. Beispielsweise dient die erfindungsgemäße Verschlussvorrichtung zur lösbaren Befestigung von Ausrüstungsgegenständen insbesondere an einem Fahrrad, an einem Rollstuhl oder an einem Kinderwagen. Auch bei Hundeleinen, bei der Takelage von Segelschiffen, bei der Befestigung von Segeln beim Surfen oder beim Kiten, bei der Befestigung von Gegenständen im Tauchsport, bei der Befestigung von Gegenständen im Jagdbereich, bei der Befestigung von Ausrüstungsgegenständen im militärischen Bereich, beim Pferdesport, beim Trekking, beim Fallschirmspringen und/oder allgemein in der Luft- und Raumfahrttechnik ist die erfindungsgemäße Verschlussvorrichtung verwendbar. Ferner ist die erfindungsgemäße Verschlussvorrichtung auch zur lösbaren Befestigung von Werkzeugen beispielsweise an Tragwesten geeignet. Auch in der Bautechnik ist die erfindungsgemäße Verschlussvorrichtung zur lösbaren Befestigung von Seilen zur Führung von Bauteilen verwendbar. Die vorgenannte Aufzählung von Verwendungsmöglichkeiten der erfindungsgemäßen Verschlussvorrichtung ist nicht abschließend zu verstehen, sondern nur beispielhaft. Demnach ist die erfindungsgemäße Verschlussvorrichtung für jegliche Anwendung verwendbar, für welche die erfindungsgemäße Verschlussvorrichtung geeignet ist, insbesondere im Bereich des Sports, der Seefahrt, der Tierwelt und der Industrie.

Die erfindungsgemäße Verschlussvorrichtung weist eine erste Verschlusseinheit auf, wobei die erste Verschlusseinheit ein kugelförmiges Eingriffsteil und eine an dem kugelförmigen Eingriffsteil angeordnete erste Halteeinrichtung zur Anordnung des ersten Teils aufweist. Mit anderen Worten ausgedrückt, wird an der ersten Halteeinrichtung das erste Teil angeordnet, welches mit dem zweiten Teil lösbar verbunden werden soll. Das kugelförmige Eingriffsteil weist beispielsweise einen Kugelkopf auf, an welchem die erste Halteeinrichtung angeordnet ist. Beispielsweise ist die erste Halteeinrichtung zumindest teilweise stabförmig ausgebildet.

Ferner weist die erfindungsgemäße Verschlussvorrichtung eine zweite Verschlusseinheit auf, die mit einer zweiten Halteeinrichtung zur Anordnung des zweiten Teils versehen ist. Ferner ist die zweite Verschlusseinheit mit einer durch eine Wandung begrenzte Ausnehmung zur Aufnahme des kugelförmigen Eingriffsteils der ersten Verschlusseinheit versehen. Die Ausnehmung der zweiten Verschlusseinheit weist eine Öffnung zur Einführung des kugelförmigen Eingriffsteils der ersten Verschlusseinheit auf, wobei das kugelförmige Eingriffsteil der ersten Verschlusseinheit zum Schließen der Verschlussvorrichtung in der Ausnehmung der zweiten Verschlusseinheit in einer Schließstellung der Verschlussvorrichtung gehalten ist.

In der Ausnehmung der zweiten Verschlusseinheit ist eine Schiebeeinheit angeordnet, wobei die Schiebeeinheit in Richtung der Öffnung der Ausnehmung der zweiten Verschlusseinheit vorgespannt ist. Darüber hinaus ist die Schiebeeinheit entlang der Wandung der Ausnehmung der zweiten Verschlusseinheit in der Ausnehmung der zweiten Verschlusseinheit in eine Öffnungsposition und in eine Verschlussposition verschiebbar. Mit anderen Worten ausgedrückt, kann die Schiebeeinheit in zwei Positionen bewegt werden, nämlich in eine erste Position in Form einer Öffnungsposition und in eine zweite Position in Form einer Verschlussposition, wobei die Schiebeeinheit beispielsweise entlang der Wandung der Ausnehmung beispielsweise geführt wird.

In der Öffnungsposition der Schiebeeinheit ist das kugelförmige Eingriffsteil der ersten Verschlusseinheit durch die Öffnung der Ausnehmung der zweiten Verschlusseinheit in die Ausnehmung der zweiten Verschlusseinheit einführbar und/oder aufnehmbar. In der Verschlussposition der Schiebeeinheit begrenzt die Schiebeeinheit eine Ausdehnung der Ausnehmung der zweiten Verschlusseinheit.

Im Grunde verkleinert die Schiebeeinheit in der Verschlussposition die Ausdehnung der Ausnehmung derart, dass die Ausdehnung der Ausnehmung kleiner ist als das in der Ausnehmung angeordnete kugelförmige Eingriffsteil. Ferner liegt in der Verschlussposition der Schiebeeinheit, welche die Schließstellung der Verschlussvorrichtung ist, das kugelförmige Eingriffsteil der ersten Verschlusseinheit sowohl an der Wandung der Ausnehmung der zweiten Verschlusseinheit als auch an der Schiebeeinheit an. Das kugelförmige Eingriffsteil ist dann klemmend zwischen der Wandung der Ausnehmung der zweiten Verschlusseinheit und der Schiebeeinheit gehalten.

Darüber hinaus ist es bei der erfindungsgemäßen Verschlussvorrichtung vorgesehen, dass das kugelförmige Eingriffsteil der ersten Verschlusseinheit magnetisch ausgebildet ist. Beispielsweise ist das kugelförmige Eingriffsteil ferromagnetisch ausgebildet. Insbesondere ist es vorgesehen, dass das kugelförmige Eingriffsteil aus Eisen gebildet ist. Ferner ist in der Ausnehmung der zweiten Verschlusseinheit eine magnetische Einheit angeordnet, die mit dem magnetisch ausgebildeten kugelförmigen Eingriffsteil der ersten Verschlusseinheit zusammenwirkt.

Bei einer Ausführungsform der erfindungsgemäßen Verschlussvorrichtung ist/sind das kugelförmige Eingriffsteil und/oder die magnetische Einheit als Permanentmagnete ausgebildet. Beispielsweise ist/sind das kugelförmige Eingriffsteil und/oder die magnetische Einheit aus einem Magneten gebildet, der zumindest teilweise aus Neodym gebildet ist. Die Erfindung ist aber nicht auf das vorgenannte Material hinsichtlich eines Magneten eingeschränkt. Vielmehr sind für die erfindungsgemäße Verschlussvorrichtung jegliche magnetischen Materialien verwendbar, welche für die Erfindung geeignet sind.

Die erfindungsgemäße Verschlussvorrichtung weist den Vorteil auf, dass sie durch ihre besondere Ausbildung, insbesondere aufgrund der Verwendung des kugelförmigen Eingriffsteils der ersten Verschlusseinheit und der Schiebeeinheit der zweiten Verschlusseinheit, ein Lösen des ersten Teils von dem zweiten Teil unter Volllast sicherstellt. Zusätzlich ist ein sicherer Halt des kugelförmigen Eingriffsteils der ersten Verschlusseinheit in der Ausnehmung der zweiten Verschlusseinheit aufgrund der Schiebeeinheit sichergestellt, und zwar insbesondere durch eine formschlüssige Verbindung der Schiebeeinheit mit dem kugelförmigen Eingriffsteil der ersten Verschlusseinheit und insbesondere durch eine formschlüssige Verbindung des kugelförmigen Eingriffsteils mit der Wandung der Ausnehmung. Ferner ist eine Relativbewegung des ersten Teils zum zweiten Teil in der Schließstellung der erfindungsgemäßen Verschlussvorrichtung möglich. Beispielsweise ist das kugelförmige Eingriffsteil um eine erste Rotationsachse um bis zu 360° drehbar. Zusätzlich oder alternativ hierzu ist das kugelförmige Eingriffsteil um bis zu 45° um eine zweite Rotationsachse schwenkbar, wobei die erste Rotationsachse senkrecht zur zweiten Rotationsachse ausgerichtet ist.

Wie oben erwähnt, ist es bei einer Ausführungsform der erfindungsgemäßen Verschlussvorrichtung zusätzlich oder alternativ vorgesehen, dass in der Verschlussposition der Schiebeeinheit das kugelförmige Eingriffsteil der ersten Verschlusseinheit in der Ausnehmung der zweiten Verschlusseinheit drehbar gehalten ist. Beispielsweise ist es zusätzlich oder alternativ vorgesehen, dass das kugelförmige Eingriffsteil der ersten Verschlusseinheit eine sich in Richtung und/oder entlang der ersten Halteeinrichtung erstreckende Längsachse aufweist und dass das kugelförmige Eingriffsteil der ersten Verschlusseinheit um diese Längsachse drehbar in der Ausnehmung gehalten ist. Beispielsweise ist das kugelförmige Eingriffsteil um diese Längsachse um bis zu 360° drehbar. Diese Ausführungsform der Erfindung gewährleistet eine besonders gute Relativbewegung der ersten Verschlusseinheit zur zweiten Verschlusseinheit und somit auch eine besonders gute Relativbewegung des ersten Teils zum zweiten Teil, wobei das erste Teil mit dem zweiten Teil über die Verschlussvorrichtung lösbar verbunden ist.

Bei einer weiteren Ausführungsform der erfindungsgemäßen Verschlussvorrichtung ist es zusätzlich oder alternativ vorgesehen, dass die erfindungsmäße Verschlussvorrichtung eines der folgenden Merkmale aufweist: (i) das kugelförmige Eingriffsteil der ersten Verschlusseinheit ist entlang einer Mantelfläche eines Kegels drehbar in der Ausnehmung gehalten, wobei eine Drehachse des kugelförmigen Eingriffsteils durch eine Spitze des Kegels verläuft, sowie (ii) das kugelförmige Eingriffsteil der ersten Verschlusseinheit ist entlang einer Mantelfläche eines Kegels drehbar in der Ausnehmung gehalten, wobei eine Drehachse des kugelförmigen Eingriffsteils durch eine Spitze des Kegels verläuft, wobei die Spitze des Kegels an einer kugelförmigen Ausbildung des kugelförmigen Eingriffsteils angeordnet ist. Beispielsweise beträgt der halbe Öffnungswinkel des Kegels bis zu 45°. Insbesondere ist die erste Verschlusseinheit um einen Winkel von bis zu 45° schwenkbar. Auch diese Ausführungsformen der Erfindung gewährleisten eine besonders gute Relativbewegung der ersten Verschlusseinheit zur zweiten Verschlusseinheit und somit auch eine besonders gute Relativbewegung des ersten Teils zum zweiten Teil, wobei das erste Teil mit dem zweiten Teil über die Verschlussvorrichtung lösbar verbunden ist.

Bei einer wiederum weiteren Ausführungsform der erfindungsmäßen Verschlussvorrichtung ist es zusätzlich oder alternativ vorgesehen, dass die magnetische Einheit die Ausnehmung der zweiten Verschlusseinheit begrenzt und dass das kugelförmige Eingriffsteil der ersten Verschlusseinheit insbesondere in der Verschlussposition der Schiebeeinheit an der magnetischen Einheit angeordnet ist. Beispielsweise liegt das kugelförmige Eingriffsteil in der Verschlussposition der Schiebeeinheit an der magnetischen Einheit an. Diese Ausführungsform der Erfindung gewährleistet einen besonders guten Halt des kugelförmigen Eingriffsteils der ersten Verschlusseinheit in der Ausnehmung der zweiten Verschlusseinheit, insbesondere in der Verschlussposition der Schiebeeinheit.

Bei der erfindungsgemäßen Verschlussvorrichtung ist es vorgesehen, dass die magnetische Einheit eine erste Außenseite und eine zweite Außenseite aufweist. Die erste Außenseite ist zur Öffnung der Ausnehmung der zweiten Verschlusseinheit gerichtet. Hingegen ist die zweite Außenseite der ersten Außenseite gegenüberliegend angeordnet. Insbesondere ist es vorgesehen, dass die erste Außenseite und die zweite Außenseite der magnetischen Einheit beabstandet zueinander angeordnet sind. Ferner ist in der Verschlussposition der Schiebeeinheit die Schiebeeinheit an der zweiten Außenseite angeordnet. Hingegen ist beispielsweise das kugelförmige Eingriffsteil der ersten Verschlusseinheit in der Verschlussposition der Schiebeeinheit an der ersten Außenseite der magnetischen Einheit angeordnet. Insbesondere ist es vorgesehen, dass das kugelförmige Eingriffsteil der ersten Verschlusseinheit an der ersten Außenseite der magnetischen Einheit anliegt.

Bei der erfindungsgemäßen Verschlussvorrichtung ist es vorgesehen, dass die Schiebeeinheit einen Fortsatz aufweist, der sich entlang einer Seitenfläche der magnetischen Einheit in Richtung der Öffnung der Ausnehmung der zweiten Verschlusseinheit erstreckt. Beispielsweise ist der Fortsatz der Schiebeeinheit an einem Basisteil der Schiebeeinheit angeordnet, wobei das Basisteil in der Verschlussposition der Schiebeeinheit an der zweiten Außenseite der magnetischen Einheit angeordnet ist. Der Fortsatz der Schiebeeinheit ist dabei derart an dem Basisteil der Schiebeeinheit angeordnet, dass der Fortsatz sich von dem Basisteil in Richtung der Öffnung der Ausnehmung entlang einer Seitenfläche der magnetischen Einheit erstreckt. Die Seitenfläche der magnetischen Einheit ist beispielsweise senkrecht oder im Wesentlichen senkrecht zur ersten Außenseite und/oder zur zweiten Außenseite der magnetischen Einheit ausgerichtet. Der Fortsatz der Schiebeeinheit ist insbesondere dazu vorgesehen, in der Verschlussposition der Schiebeeinheit an dem kugelförmigen Eingriffsteil der ersten Verschlusseinheit anzuliegen, so dass das kugelförmige Eingriffsteil der ersten Verschlusseinheit klemmend zwischen der Wandung der Ausnehmung der zweiten Verschlusseinheit und dem Fortsatz der Schiebeeinheit gehalten ist.

Bei der erfindungsmäßen Verschlussvorrichtung ist es vorgesehen, dass die zweite Verschlusseinheit eine Wandungsausnehmung aufweist, in welcher die magnetische Einheit angeordnet ist. Beispielsweise ist die Wandungsausnehmung als Schlitz ausgebildet, in welcher die magnetische Einheit kraft- und/oder formschlüssig angeordnet ist. Beispielsweise ragt die magnetische Einheit von der Wandungsausnehmung in die Ausnehmung der zweiten Verschlusseinheit hinein. Insbesondere ist es vorgesehen, dass die Wandungsausnehmung als Halterung für die magnetische Einheit ausgebildet ist. Auf diese Weise ist sichergestellt, dass die magnetische Einheit besonders gut und einfach an der zweiten Verschlusseinheit angeordnet und gehalten ist.

Bei einer Ausführungsform der erfindungsgemäßen Verschlussvorrichtung ist es zusätzlich oder alternativ vorgesehen, dass die zweite Verschlusseinheit ein Federelement aufweist. Das Federelement ist mit einem ersten Ende und mit einem zweiten Ende versehen. Das erste Ende des Federelements stützt sich an der Schiebeeinheit ab. Hingegen stützt sich das zweite Ende des Federelements an einer Abstützwand der zweiten Verschlusseinheit ab. Diese Ausführungsform der erfindungsgemäßen Verschlussvorrichtung gewährleistet mit einfachen und preiswerten Mitteln eine besonders gute Vorspannung der Schiebeeinheit in Richtung der Öffnung der Ausnehmung. Beispielsweise ist das Federelement als Schraubenfeder ausgebildet. Die Erfindung ist allerdings nicht auf die Verwendung einer Schraubenfeder eingeschränkt. Vielmehr kann als Federelement jegliche Art von Feder und jegliches Federmaterial verwendet werden, welche(s) für die Erfindung geeignet ist.

Bei einer weiteren Ausführungsform der erfindungsgemäßen Verschlussvorrichtung ist es zusätzlich oder alternativ vorgesehen, dass die Abstützwand an der zweiten Halteeinrichtung zur Anordnung des zweiten Teils angeordnet ist. Insbesondere ist es vorgesehen, dass die zweite Halteeinrichtung an der zweiten Verschlusseinheit lösbar befestigt ist. Beispielsweise ist die zweite Halteeinrichtung an die zweite Verschlusseinheit schraubbar. Diese Ausführungsform gewährleistet, dass die Ausnehmung der zweiten Verschlusseinheit bei der Montage der erfindungsmäßen Verschlussvorrichtung einfach zugänglich ist, und die Schiebeeinheit sowie die magnetische Einheit in der Ausnehmung der zweiten Verschlusseinheit einfach montierbar sind. Bei einer alternativen Ausführungsform ist die zweite Halteeinrichtung einstückig mit der zweiten Verschlusseinheit verbunden oder beispielsweise mittels einer Klebeverbindung an der zweiten Verschlusseinheit angeordnet.

Bei einer weiteren Ausführungsform der erfindungsgemäßen Verschlussvorrichtung ist es zusätzlich oder alternativ vorgesehen, dass die Schiebeeinheit an einer ersten Betätigungseinrichtung angeordnet ist. Die erste Betätigungseinrichtung wirkt mit der Schiebeeinheit zusammen. Mit anderen Worten ausgedrückt, ist es mit der ersten Betätigungseinrichtung möglich, die Schiebeeinheit von der Verschlussposition in die Öffnungsposition und beispielsweise auch umgekehrt zu bewegen. Beispielsweise ist die erste Betätigungseinrichtung an der Abstützwand der zweiten Halteeinrichtung angeordnet. Bei einer Ausführungsform der erfindungsgemäßen Verschlussvorrichtung ist die Betätigungseinrichtung als ein Bowdenzug ausgebildet, der an der Schiebeeinheit angeordnet und durch eine Öffnung an der zweiten Halteeinrichtung geführt ist. Diese Ausführungsform der erfindungsgemäßen Verschlussvorrichtung gewährleistet ein besonders einfaches Lösen des ersten Teils vom zweiten Teil durch Betätigen der ersten Betätigungseinrichtung, insbesondere unter Volllast.

Bei einer wiederum weiteren Ausführungsform der erfindungsgemäßen Verschlussvorrichtung ist es zusätzlich oder alternativ vorgesehen, dass die Schiebeeinheit an einer zweiten Betätigungseinrichtung angeordnet ist. Die zweite Betätigungseinrichtung wirkt mit der Schiebeeinheit zusammen. Mit anderen Worten ausgedrückt, ist es mit der zweiten Betätigungseinrichtung möglich, die Schiebeeinheit von der Verschlussposition in die Öffnungsposition und beispielsweise auch umgekehrt zu bewegen. Bei dieser Ausführungsform ist es vorgesehen, dass die zweite Betätigungseinrichtung an einer Außenseite der zweiten Verschlusseinheit angeordnet ist. Beispielsweise ist die zweite Betätigungseinrichtung hülsenförmig ausgebildet und ist über die zweite Verschlusseinheit gestülpt. Insbesondere ist es bei einer Ausführungsform vorgesehen, dass die zweite Betätigungseinrichtung über mindestens einen Stift mit der Schiebeeinheit verbunden ist. Auch diese Ausführungsform der erfindungsgemäßen Verschlussvorrichtung gewährleistet ein besonders einfaches Lösen des ersten Teils vom zweiten Teil durch Betätigen der zweiten Betätigungseinrichtung, insbesondere unter Volllast.

Bei einer Ausführungsform der erfindungsgemäßen Verschlussvorrichtung ist es zusätzlich oder alternativ vorgesehen, dass die Ausdehnung der Ausnehmung der zweiten Verschlusseinheit größer als die Ausdehnung der Öffnung der zweiten Verschlusseinheit ist. Dabei ist die Ausdehnung der Ausnehmung durch den Abstand zweier sich gegenüberliegender Punkte der Wandung der Ausnehmung gegeben, wobei der Abstand die Länge einer Geraden ist, die senkrecht zu einer Längsachse ausgerichtet ist, wobei die Längsachse durch die Ausnehmung und durch die Öffnung der zweiten Verschlusseinheit verläuft. Ferner ist die Ausdehnung der Öffnung durch den Abstand zweier sich gegenüberliegender Punkte der Begrenzung der Öffnung gegeben, wobei der Abstand die Länge einer Geraden ist, die senkrecht zu einer Längsachse ausgerichtet ist, wobei die Längsachse durch die Ausnehmung und durch die Öffnung der zweiten Verschlusseinheit verläuft. Beispielsweise ist die Öffnung der Ausnehmung kreisförmig und/oder zylinderförmig ausgebildet. Zusätzlich oder alternativ hierzu ist es vorgesehen, dass die Ausnehmung zylinderförmig ausgebildet ist. Wenn der Querschnitt der Ausnehmung und der Querschnitt der Öffnung kreisförmig ausgebildet sind, ist es bei dieser Ausführungsform der erfindungsgemäßen Verschlussvorrichtung vorgesehen, dass der Durchmesser der Ausnehmung größer als der Durchmesser der Öffnung ist. Der Durchmesser der Ausnehmung wird in der Verschlussposition der Schiebeeinheit verringert, sodass der Durchmesser der Ausnehmung kleiner als der Durchmesser des kugelförmigen Eingriffsteils ist. Das kugelförmige Eingriffsteil ist dann in der Ausnehmung der zweiten Verschlusseinheit sicher gehalten.

Bei einer weiteren Ausführungsform der erfindungsgemäßen Verschlussvorrichtung ist es zusätzlich oder alternativ vorgesehen, dass die zweite Verschlusseinheit hülsenförmig ausgebildet ist. Die Erfindung ist aber nicht auf die vorgenannte Ausbildung der zweiten Verschlusseinheit eingeschränkt. Vielmehr kann die zweite Verschlusseinheit jegliche Ausbildung aufweisen, welche für die Erfindung geeignet ist, beispielsweise eine zylinderförmige Ausbildung, eine quaderförmige Ausbildung und/oder auch eine kugelförmige Ausbildung.

Wie oben bereits ausgeführt, ist es bei einer Ausführungsform der erfindungsgemäßen Verschlussvorrichtung zusätzlich oder alternativ vorgesehen, dass das kugelförmige Eingriffsteil aus Eisen gebildet ist.

Bei einer weiteren Ausführungsform der erfindungsgemäßen Verschlussvorrichtung ist es zusätzlich oder alternativ vorgesehen, dass die Schiebeeinheit an einer Betätigungseinrichtung angeordnet ist und dass die Betätigungseinrichtung als Druckschalter zur Umlenkung einer Kraft zur Bewegung der Schiebeeinheit ausgebildet ist. Beispielsweise wirkt der Druckschalter mit einer Bewegungseinheit oder mit mehreren Bewegungseinheiten zusammen, das dann oder die dann die Schiebeeinheit bewegt/bewegen. Mit anderen Worten ausgedrückt, ist es mit der Betätigungseinrichtung möglich, die Schiebeeinheit von der Verschlussposition in die Öffnungsposition und beispielsweise auch umgekehrt zu bewegen.

Eine noch weitere erfindungsgemäße Verschlussvorrichtung ist ebenfalls zum lösbaren Verbinden eines ersten Teils mit einem zweiten Teil vorgesehen. Die noch weitere erfindungsgemäße Verschlussvorrichtung ist in zahlreichen Bereichen des täglichen Lebens verwendbar. Wenn ein Gegenstand, beispielsweise ein Zubehörteil, ein Ausrüstungsgegenstand und/oder ein Werkzeug, nicht zur ständigen Befestigung an einer Person und/oder einem weiteren Gegenstand vorgesehen ist, wird mittels der erfindungsgemäßen Verschlussvorrichtung eine einfache und zuverlässige lösbare Befestigung des Gegenstands an der Person und/oder dem weiteren Gegenstand bereitgestellt. Beispielsweise dient die noch weitere erfindungsgemäße Verschlussvorrichtung zur lösbaren Befestigung von Ausrüstungsgegenständen insbesondere an einem Fahrrad, an einem Rollstuhl oder an einem Kinderwagen. Auch bei Hundeleinen, bei der Takelage von Segelschiffen, bei der Befestigung von Segeln beim Surfen oder beim Kiten, bei der Befestigung von Gegenständen im Tauchsport, bei der Befestigung von Gegenständen im Jagdbereich, bei der Befestigung von Ausrüstungsgegenständen im militärischen Bereich, beim Pferdesport, beim Trekking, beim Fallschirmspringen und/oder allgemein in der Luft- und Raumfahrttechnik ist die noch weitere erfindungsgemäße Verschlussvorrichtung verwendbar. Ferner ist die noch weitere erfindungsgemäße Verschlussvorrichtung auch zur lösbaren Befestigung von Werkzeugen beispielsweise an Tragwesten geeignet. Auch in der Bautechnik ist die noch weitere erfindungsgemäße Verschlussvorrichtung zur lösbaren Befestigung von Seilen zur Führung von Bauteilen verwendbar. Die vorgenannte Aufzählung von Verwendungsmöglichkeiten der noch weiteren erfindungsgemäßen Verschlussvorrichtung ist nicht abschließend zu verstehen, sondern nur beispielhaft. Demnach ist die noch weitere erfindungsgemäße Verschlussvorrichtung für jegliche Anwendung verwendbar, für welche die noch weitere erfindungsgemäße Verschlussvorrichtung geeignet ist, insbesondere im Bereich des Sports, der Seefahrt, der Tierwelt und der Industrie.

Die noch weitere erfindungsgemäße Verschlussvorrichtung weist eine erste Verschlusseinheit auf, wobei die erste Verschlusseinheit ein Eingriffsteil und eine an dem Eingriffsteil angeordnete erste Halteeinrichtung zur Anordnung des ersten Teils aufweist. Mit anderen Worten ausgedrückt, wird an der ersten Halteeinrichtung das erste Teil angeordnet, welches mit dem zweiten Teil lösbar verbunden werden soll. Das Eingrifffsteil ist kugelförmig ausgebildet und weist beispielsweise einen Kugelkopf auf, an welchem die erste Halteeinrichtung angeordnet ist. Beispielsweise ist die erste Halteeinrichtung zumindest teilweise stabförmig ausgebildet.

Ferner weist die noch weitere erfindungsgemäße Verschlussvorrichtung eine zweite Verschlusseinheit auf, die mit einer zweiten Halteeinrichtung zur Anordnung des zweiten Teils versehen ist. Ferner ist die zweite Verschlusseinheit mit einer Ausnehmung zur Aufnahme des Eingriffsteils der ersten Verschlusseinheit versehen. Die Ausnehmung der zweiten Verschlusseinheit weist eine Öffnung zur Einführung des Eingriffsteils der ersten Verschlusseinheit auf, wobei das Eingriffsteil der ersten Verschlusseinheit zum Schließen der Verschlussvorrichtung in der Ausnehmung der zweiten Verschlusseinheit in einer Schließstellung der Verschlussvorrichtung gehalten ist.

In der Ausnehmung der zweiten Verschlusseinheit ist eine Schiebeeinheit angeordnet, wobei die Schiebeeinheit in Richtung der Öffnung der Ausnehmung der zweiten Verschlusseinheit vorgespannt ist. Darüber hinaus ist die Schiebeeinheit entlang einer Wandung der Ausnehmung der zweiten Verschlusseinheit in der Ausnehmung der zweiten Verschlusseinheit in eine Öffnungsposition und in eine Verschlussposition verschiebbar. Mit anderen Worten ausgedrückt, kann die Schiebeeinheit in zwei Positionen bewegt werden, nämlich in eine erste Position in Form einer Öffnungsposition und in eine zweite Position in Form einer Verschlussposition, wobei die Schiebeeinheit beispielsweise entlang der Wandung der Ausnehmung geführt wird.

In der Öffnungsposition der Schiebeeinheit ist das Eingriffsteil der ersten Verschlusseinheit durch die Öffnung der Ausnehmung der zweiten Verschlusseinheit in die Ausnehmung der zweiten Verschlusseinheit einführbar und/oder aufnehmbar. In der Verschlussposition der Schiebeeinheit begrenzt die Schiebeeinheit eine Ausdehnung der Ausnehmung der zweiten Verschlusseinheit. Im Grunde verkleinert die Schiebeeinheit in der Verschlussposition die Ausdehnung der Ausnehmung derart, dass die Ausdehnung der Ausnehmung kleiner ist als das in der Ausnehmung angeordnete Eingriffsteil. Ferner liegt in der Verschlussposition der Schiebeeinheit, welche die Schließstellung der Verschlussvorrichtung ist, das Eingriffsteil der ersten Verschlusseinheit sowohl an der Wandung der Ausnehmung der zweiten Verschlusseinheit als auch an der Schiebeeinheit an. Das Eingriffsteil ist dann klemmend zwischen der Wandung der Ausnehmung der zweiten Verschlusseinheit und der Schiebeeinheit gehalten.

An einem Ende der zweiten Verschlusseinheit der noch weiteren erfindungsgemäßen Verschlussvorrichtung ist eine Endkappe angeordnet. Die Endkappe weist einen Hohlraum auf, der die Ausnehmung bildet. Eine den Hohlraum umgebende Wand der Endkappe bildet die Wandung der Ausnehmung. Die Endkappe weist die Öffnung auf.

Die noch weitere erfindungsgemäße Verschlussvorrichtung weist den Vorteil auf, dass sie durch ihre besondere Ausbildung, insbesondere aufgrund der Verwendung des Eingriffsteils der ersten Verschlusseinheit und der Schiebeeinheit der zweiten Verschlusseinheit, ein Lösen des ersten Teils von dem zweiten Teil unter Volllast sicherstellt. Zusätzlich ist ein sicherer Halt des Eingriffsteils der ersten Verschlusseinheit in der Ausnehmung der zweiten Verschlusseinheit aufgrund der Schiebeeinheit sichergestellt, und zwar insbesondere durch eine formschlüssige Verbindung der Schiebeeinheit mit dem Eingriffsteil der ersten Verschlusseinheit und insbesondere durch eine formschlüssige Verbindung des Eingriffsteils mit der Wandung der Ausnehmung. Ferner ist eine Relativbewegung des ersten Teils zum zweiten Teil in der Schließstellung der noch weiteren erfindungsgemäßen Verschlussvorrichtung möglich. Beispielsweise ist das Eingriffsteil um eine erste Rotationsachse um bis zu 360° drehbar. Zusätzlich oder alternativ hierzu ist das Eingriffsteil um bis zu 45° um eine zweite Rotationsachse schwenkbar, wobei die erste Rotationsachse senkrecht zur zweiten Rotationsachse ausgerichtet ist. Aufgrund der Ausbildung mit der Endkappe ist die noch weitere erfindungsgemäße Verschlussvorrichtung besonders einfach zu montieren, da die Montage durch einfaches Zusammenstecken der einzelnen Bauteile erfolgen kann.

Bei einer Ausführungsform der noch weiteren erfindungsgemäßen Verschlussvorrichtung ist es zusätzlich oder alternativ vorgesehen, dass die Endkappe mindestens einen Steg aufweist, welcher in die zweite Verschlusseinheit hineinragt und welcher die den Hohlraum umgebende Wand bildet.

Bei der noch weiteren erfindungsgemäßen Verschlussvorrichtung ist es vorgesehen, dass das Eingriffsteil der ersten Verschlusseinheit magnetisch ausgebildet ist. Beispielsweise ist das Eingriffsteil ferromagnetisch ausgebildet. Insbesondere ist es vorgesehen, dass das Eingriffsteil aus Eisen gebildet ist. Ferner ist in der Ausnehmung der zweiten Verschlusseinheit eine magnetische Einheit angeordnet, die mit dem magnetisch ausgebildeten Eingriffsteil der ersten Verschlusseinheit zusammenwirkt.

Bei einer noch weiteren Ausführungsform der noch weiteren erfindungsgemäßen Verschlussvorrichtung ist/sind das Eingriffsteil und/oder die magnetische Einheit als Permanentmagnete ausgebildet. Beispielsweise ist/sind das Eingriffsteil und/oder die magnetische Einheit aus einem Magneten gebildet, der zumindest teilweise aus Neodym gebildet ist. Die Erfindung ist aber nicht auf das vorgenannte Material hinsichtlich eines Magneten eingeschränkt. Vielmehr sind für die noch weitere erfindungsgemäße Verschlussvorrichtung jegliche magnetischen Materialien verwendbar, welche für die Erfindung geeignet sind.

Bei einer wiederum weiteren Ausführungsform der noch weiteren erfindungsmäßen Verschlussvorrichtung ist es zusätzlich oder alternativ vorgesehen, dass die magnetische Einheit die Ausnehmung der zweiten Verschlusseinheit begrenzt und dass das Eingriffsteil der ersten Verschlusseinheit insbesondere in der Verschlussposition der Schiebeeinheit an der magnetischen Einheit angeordnet ist. Beispielsweise liegt das Eingriffsteil in der Verschlussposition der Schiebeeinheit an der magnetischen Einheit an. Diese Ausführungsform der Erfindung gewährleistet einen besonders guten Halt des Eingriffsteils der ersten Verschlusseinheit in der Ausnehmung der zweiten Verschlusseinheit, insbesondere in der Verschlussposition der Schiebeeinheit.

Bei der noch weiteren erfindungsgemäßen Verschlussvorrichtung ist es vorgesehen, dass die magnetische Einheit eine erste Außenseite und eine zweite Außenseite aufweist. Die erste Außenseite ist zur Öffnung der Ausnehmung der zweiten Verschlusseinheit gerichtet. Hingegen ist die zweite Außenseite der ersten Außenseite gegenüberliegend angeordnet. Insbesondere ist es vorgesehen, dass die erste Außenseite und die zweite Außenseite der magnetischen Einheit beabstandet zueinander angeordnet sind. Ferner sind in der Verschlussposition der Schiebeeinheit die Schiebeeinheit an der zweiten Außenseite und das Eingriffsteil an der ersten Außenseite angeordnet. Insbesondere ist es vorgesehen, dass das Eingriffsteil der ersten Verschlusseinheit an der ersten Außenseite der magnetischen Einheit anliegt.

Bei der noch weiteren erfindungsgemäßen Verschlussvorrichtung ist es vorgesehen, dass die Schiebeeinheit einen Fortsatz aufweist, der sich in Richtung der Öffnung der Ausnehmung der zweiten Verschlusseinheit erstreckt. Es ist vorgesehen, dass der Fortsatz sich entlang einer Seitenfläche der magnetischen Einheit erstreckt. Ferner ist es beispielsweise vorgesehen, dass der Fortsatz einstückig mit der Schiebeeinheit ausgebildet ist. Zusätzlich oder alternativ hierzu ist es vorgesehen, dass der Fortsatz der Schiebeeinheit an einem Basisteil der Schiebeeinheit angeordnet ist, wobei das Basisteil in der Verschlussposition der Schiebeeinheit an der zweiten Außenseite der magnetischen Einheit angeordnet ist. Der Fortsatz der Schiebeeinheit ist dabei derart an dem Basisteil der Schiebeeinheit angeordnet, dass der Fortsatz sich von dem Basisteil in Richtung der Öffnung der Ausnehmung entlang einer Seitenfläche der magnetischen Einheit erstreckt. Die Seitenfläche der magnetischen Einheit ist beispielsweise senkrecht oder im Wesentlichen senkrecht zur ersten Außenseite und/oder zur zweiten Außenseite der magnetischen Einheit ausgerichtet. Der Fortsatz der Schiebeeinheit ist dazu vorgesehen, in der Verschlussposition der Schiebeeinheit an dem Eingriffsteil der ersten Verschlusseinheit anzuliegen, so dass das Eingriffsteil der ersten Verschlusseinheit klemmend zwischen der Wandung der Ausnehmung der zweiten Verschlusseinheit und dem Fortsatz der Schiebeeinheit gehalten ist.

Bei einer Ausführungsform der noch weiteren erfindungsgemäßen Verschlussvorrichtung ist es zusätzlich oder alternativ vorgesehen, dass die zweite Verschlusseinheit mindestens ein Federelement aufweist. Das Federelement ist mit einem ersten Ende und mit einem zweiten Ende versehen. Das erste Ende des Federelements stützt sich an der Schiebeeinheit ab. Hingegen stützt sich das zweite Ende des Federelements an einer Abstützwand der zweiten Verschlusseinheit ab. Diese Ausführungsform der noch weiteren erfindungsgemäßen Verschlussvorrichtung gewährleistet mit einfachen und preiswerten Mitteln eine besonders gute Vorspannung der Schiebeeinheit in Richtung der Öffnung der Ausnehmung. Beispielsweise ist das Federelement als Schraubenfeder ausgebildet. Die Erfindung ist allerdings nicht auf die Verwendung einer Schraubenfeder eingeschränkt. Vielmehr kann als Federelement jegliche Art von Feder und jegliches Federmaterial verwendet werden, welche(s) für die Erfindung geeignet ist.

Bei einer Ausführungsform der noch weiteren erfindungsgemäßen Verschlussvorrichtung ist es zusätzlich oder alternativ vorgesehen, dass die Ausdehnung der Ausnehmung der zweiten Verschlusseinheit größer als die Ausdehnung der Öffnung der zweiten Verschlusseinheit ist. Dabei ist die Ausdehnung der Ausnehmung durch den Abstand zweier sich gegenüberliegender Punkte der Wandung der Ausnehmung gegeben, wobei der Abstand die Länge einer Geraden ist, die senkrecht zu einer Längsachse ausgerichtet ist, wobei die Längsachse durch die Ausnehmung und durch die Öffnung der zweiten Verschlusseinheit verläuft. Ferner ist die Ausdehnung der Öffnung durch den Abstand zweier sich gegenüberliegender Punkte der Begrenzung der Öffnung gegeben, wobei der Abstand die Länge einer Geraden ist, die senkrecht zu einer Längsachse ausgerichtet ist, wobei die Längsachse durch die Ausnehmung und durch die Öffnung der zweiten Verschlusseinheit verläuft. Beispielsweise ist die Öffnung der Ausnehmung kreisförmig und/oder zylinderförmig ausgebildet. Zusätzlich oder alternativ hierzu ist es vorgesehen, dass die Ausnehmung zylinderförmig ausgebildet ist. Wenn der Querschnitt der Ausnehmung und der Querschnitt der Öffnung kreisförmig ausgebildet sind, ist es bei dieser Ausführungsform der erfindungsgemäßen Verschlussvorrichtung vorgesehen, dass der Durchmesser der Ausnehmung größer als der Durchmesser der Öffnung ist. Der Durchmesser der Ausnehmung wird in der Verschlussposition der Schiebeeinheit verringert, sodass der Durchmesser der Ausnehmung kleiner als die Ausdehnung des Eingriffsteils ist. Das Eingriffsteil ist dann in der Ausnehmung der zweiten Verschlusseinheit sicher gehalten.

Es ist vorgesehen, dass das Eingriffsteil der ersten Verschlusseinheit kugelförmig ausgebildet ist. Beispielsweise ist es vorgesehen, dass in der Verschlussposition der Schiebeeinheit das kugelförmige Eingriffsteil drehbar in der Ausnehmung gehalten ist.

Wie oben bereits ausgeführt, ist es bei einer Ausführungsform der noch weiteren erfindungsgemäßen Verschlussvorrichtung zusätzlich oder alternativ vorgesehen, dass das Eingriffsteil aus Eisen gebildet ist.

Bei einer Ausführungsform der noch weiteren erfindungsgemäßen Verschlussvorrichtung ist es zusätzlich oder alternativ vorgesehen, dass das Eingriffsteil eine erste abgeschrägte Fläche aufweist, wobei ein in die Ausnehmung ragender Vorsprung der Endkappe eine zweite abgeschrägte Fläche aufweist, wobei die erste abgeschrägte Fläche mit der zweiten abgeschrägten Fläche ausschließlich in der Verschlussposition der Schiebeeinheit zusammenwirkt.

Weitere praktische Ausführungsformen und Vorteile der Erfindung sind nachfolgend im Zusammenhang mit den Zeichnungen beschrieben. Es zeigen:
- Fig. 1: eine schematische Darstellung einer Verschlussvorrichtung mit einer ersten Verschlusseinheit und mit einer zweiten Verschlusseinheit;
- Fig. 2: eine geschnittene Ansicht der Verschlussvorrichtung nach Figur 1;
- Fig. 3: eine schematische Darstellung der zweiten Verschlusseinheit der Verschlussvorrichtung nach Figur 1;
- Fig. 4: eine erste Seitenansicht der zweiten Verschlusseinheit nach Figur 3;
- Fig. 5: eine zweite, um 90° zur ersten Seitenansicht nach Figur 4 gedrehte Seitenansicht der zweiten Verschlusseinheit;
- Fig. 6: eine dritte, um 90° zur ersten Seitenansicht nach Figur 4 gedrehte Seitenansicht der zweiten Verschlusseinheit;
- Fig. 7: eine schematische Darstellung einer Basiseinheit einer zweiten Verschlusseinheit einer weiteren Verschlussvorrichtung;
- Fig. 8: eine schematische Darstellung der Basiseinheit der zweiten Verschlusseinheit der weiteren Verschlussvorrichtung gemäß Figur 7 sowie ein Eingriffsteil einer ersten Verschlusseinheit;
- Fig. 9: eine Seitenansicht der Basiseinheit der zweiten Verschlusseinheit der weiteren Verschlussvorrichtung gemäß Figur 7;
- Fig. 10: eine weitere schematische Darstellung der Basiseinheit der zweiten Verschlusseinheit der weiteren Verschlussvorrichtung gemäß Figur 7;
- Fig. 11: eine schematische Darstellung einer Deckeleinheit der Basiseinheit der zweiten Verschlusseinheit der weiteren Verschlussvorrichtung gemäß Figur 7;
- Fig. 12: eine schematische Darstellung einer Schiebeeinheit der weiteren Verschlussvorrichtung gemäß Figur 7;
- Fig. 13: eine schematische Seitenansicht der weiteren Verschlussvorrichtung, wobei Komponenten, die in einer Ausnehmung aufgenommen sind, mit gestrichelten Linien dargestellt sind; sowie
- Fig. 14: eine schematische Darstellung einer noch weiteren Verschlussvorrichtung mit einer ersten Verschlusseinheit und mit einer zweiten Verschlusseinheit.

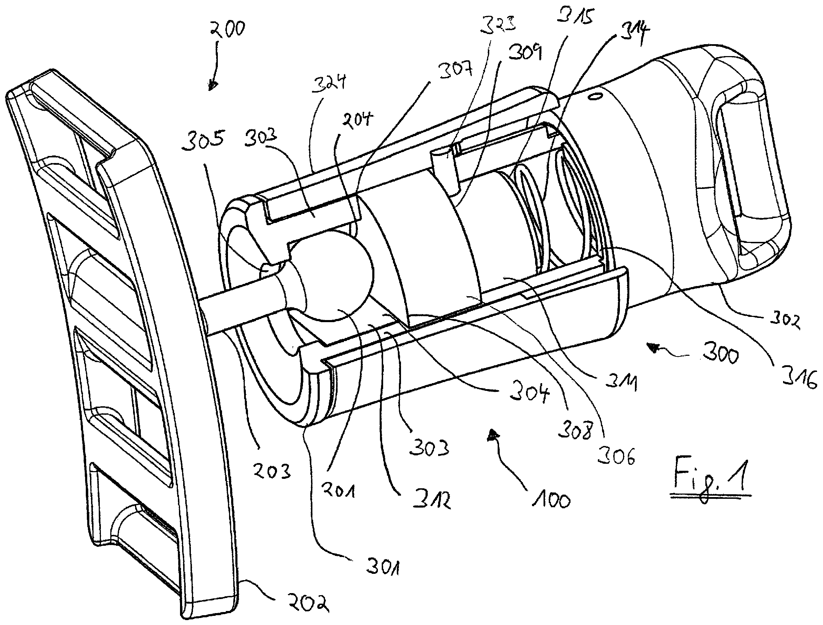

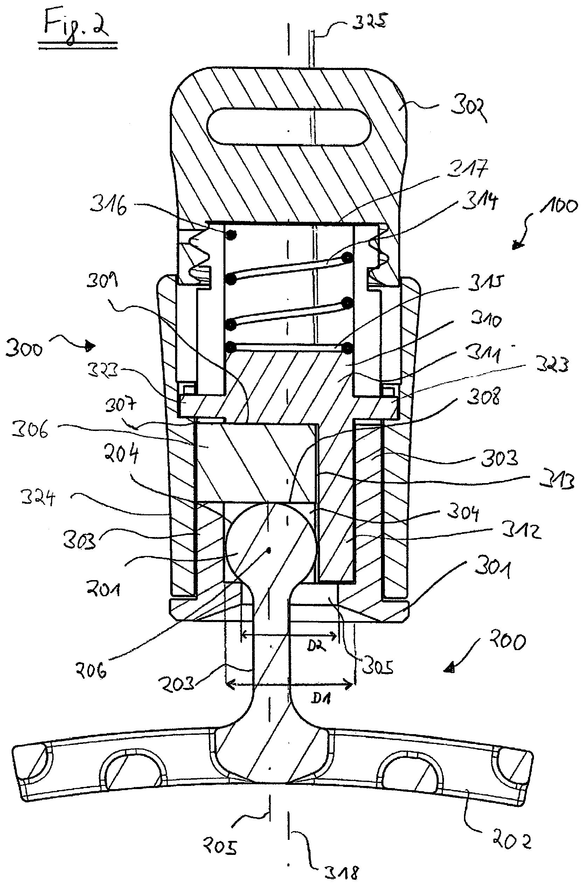

**Figur 1** zeigt eine schematische Darstellung einer Ausführungsform der erfindungsgemäßen Verschlussvorrichtung 100 mit einer ersten Verschlusseinheit 200 und mit einer zweiten Verschlusseinheit 300, wobei Teile der nachfolgend noch erläuterten Einheiten in der **Figur 1** nicht dargestellt sind, um die Anordnung der einzelnen Einheiten in der Verschlussvorrichtung 100 sowie die Wirkungsweise der einzelnen Einheiten besser darzustellen. **Figur 2** zeigt eine geschnittene Ansicht der Verschlussvorrichtung 100 nach **Figur 1****.** Nachfolgend wird zunächst auf die **Figuren 1** **und** **2** eingegangen.

Die erste Verschlusseinheit 200 weist ein kugelförmiges Eingriffsteil 201 und eine an dem kugelförmigen Eingriffsteil 201 angeordnete erste Halteeinrichtung 202 auf. Ferner ist die erste Halteeinrichtung 202 mit einem zylinderförmigen Stab 203 versehen, welcher an dem kugelförmigen Eingriffsteil 201 angeordnet ist. Die erste Halteeinrichtung 202 dient der Anordnung eines ersten Teils, welches mit einem zweiten Teil lösbar verbunden wird. Beispielsweise kann an der ersten Halteeinrichtung 202 ein Gurt und/oder ein Karabinerhaken befestigt werden. Die Erfindung ist aber auf derartige erste Teile nicht eingeschränkt. Vielmehr kann an der ersten Halteeinrichtung 202 jegliches erste Teil angeordnet werden, welches mit dem zweiten Teil lösbar verbunden wird.

Das kugelförmige Eingriffsteil 201 weist einen Kugelkopf 204 auf, welcher beispielsweise teilweise oder vollständig als Permanentmagnet ausgebildet ist. Beispielsweise ist der Kugelkopf 204 aus einem Magneten gebildet, der zumindest teilweise aus Neodym gebildet ist. Die Erfindung ist aber auf das vorgenannte Material hinsichtlich eines Magneten nicht eingeschränkt. Vielmehr sind für die erfindungsmäße Verschlussvorrichtung jegliche magnetischen Materialen verwendbar, welche für die Erfindung geeignet sind. Bei einer weiteren Ausführungsform ist der Kugelkopf 204 aus Eisen gebildet, das ferromagnetisch ist.

Ferner weist die erfindungsgemäße Verschlussvorrichtung 100 die zweite Verschlusseinheit 300 auf, welche mit einer Basiseinheit 301 sowie mit einer an der Basiseinheit 301 angeordneten zweiten Halteeinrichtung 302 versehen ist. Beispielsweise ist die zweite Halteeinrichtung 302 auf die Basiseinheit 301 aufgeschraubt. Alternativ hierzu ist die zweite Halteeinrichtung 302 beispielweise in die Basiseinheit 301 eingeschraubt.

Die Basiseinheit 301 der zweiten Verschlusseinheit 300 ist bei der hier dargestellten Ausführungsform der erfindungsgemäßen Verschlussvorrichtung 100 hülsenförmig ausgebildet. Die Erfindung ist aber auf die vorgenannte Ausbildung der Basiseinheit 301 nicht eingeschränkt. Vielmehr kann die Basiseinheit 301 jegliche Ausbildung aufweisen, welche für die Erfindung geeignet ist, beispielsweise eine zylinderförmige Ausbildung, eine quaderförmige Ausbildung und/oder auch eine kugelförmige Ausbildung.

Die zweite Halteeinrichtung 302 ist ösenförmig ausgebildet und dient der Anordnung des zweiten Teils, welches lösbar mit dem ersten Teil verbunden wird. Beispielsweise kann/können an der zweiten Halteeinrichtung 302 ein Gurt und/oder ein Karabinerhaken angeordnet sein. Die Erfindung ist aber auf derartige zweite Teile nicht eingeschränkt. Vielmehr kann an der zweiten Halteeinrichtung 302 jegliches zweite Teil angeordnet werden, welches mit dem ersten Teil lösbar verbunden wird.

Die Basiseinheit 301 der zweiten Verschlusseinheit 300 weist eine Wandung 303 auf, die eine Ausnehmung 304 zur Aufnahme des kugelförmigen Eingriffsteils 201 der ersten Verschlusseinheit 200 begrenzt. Die Ausnehmung 304 der Basiseinheit 301 ist im Grunde in einem Innenraum der hülsenförmigen Basiseinheit 301 angeordnet. Ferner weist die Ausnehmung 304 der Basiseinheit 301 eine Öffnung 305 auf. Das kugelförmige Eingriffsteil 201 ist zum Schließen der Verschlussvorrichtung 100 in der Ausnehmung 304 der Basiseinheit 301 in einer Schließstellung der Verschlussvorrichtung 100 gehalten.

Ferner ist in der und an der Ausnehmung 304 der Basiseinheit 301 eine magnetische Einheit 306 angeordnet. Hierzu weist die Basiseinheit 301 eine Wandungsausnehmung 307 auf, in welcher die magnetische Einheit 306 klemmend gehalten ist und von welcher aus die magnetische Einheit 306 in die Ausnehmung 304 der Basiseinheit 301 hineinragt. Die Wandungsausnehmung 307 ist bei dieser Ausführungsform als Schlitz ausgebildet, in welchem die magnetische Einheit 306 kraft- und formschlüssig angeordnet ist. Die Wandungsausnehmung 307 ist demnach als Halterung für die magnetische Einheit 306 ausgebildet. Die magnetische Einheit 306 begrenzt bei dieser Ausführungsform die Ausnehmung 304. Beispielweise ist die magnetische Einheit 306 als Permanentmagnet ausgebildet. Insbesondere ist es vorgesehen, dass die magnetische Einheit 306 aus einem Magneten gebildet ist, der zumindest teilweise aus Neodym gebildet ist. Die Erfindung ist aber nicht auf das vorgenannte Material hinsichtlich eines Magneten beschränkt. Vielmehr sind für die erfindungsmäße Verschlussvorrichtung 100 jegliche magnetischen Materialien verwendbar, welche für die Erfindung geeignet sind.

Die magnetische Einheit 306 weist eine erste Außenseite 308 und eine zweite Außenseite 309 auf. Die erste Außenseite 308 ist zur Öffnung 305 der Ausnehmung 304 der Basiseinheit 301 gerichtet. Hingegen ist die zweite Außenseite 309 der ersten Außenseite 308 gegenüberliegend angeordnet. Bei der hier dargestellten Ausführungsform ist es vorgesehen, dass die erste Außenseite 308 und die zweite Außenseite 309 der magnetischen Einheit 306 beabstandet zueinander angeordnet sind. An der zweiten Außenseite 309 ist ein Basisteil 310 einer Schiebeeinheit 311 angeordnet. Die Schiebeeinheit 311 weist einen Fortsatz 312 auf, der sich entlang einer Seitenfläche 313 der magnetischen Einheit 306 in Richtung der Öffnung 305 der Ausnehmung 304 erstreckt. Der Fortsatz 312 der Schiebeeinheit 311 ist an dem Basisteil 310 der Schiebeeinheit 311 angeordnet, beispielsweise einstückig an dem Basisteil 310 angeformt. Die Seitenfläche 313 der magnetischen Einheit 306 ist beispielsweise senkrecht oder im Wesentlichen senkrecht zur ersten Außenseite 308 und zur zweiten Außenseite 309 der magnetischen Einheit 306 ausgerichtet. Die Ausdehnung der magnetischen Einheit 306 entlang einer Geraden, die senkrecht zu einer Längsachse in Form einer Rotationsachse 318 der Basiseinheit 301 ausgerichtet ist, ist dabei derart gewählt, dass sich die magnetische Einheit 306 nicht entlang einer gesamten Ausdehnung der Ausnehmung 304 entlang dieser Geraden erstreckt, sondern nur derart in der Ausnehmung 304 angeordnet ist, dass der Fortsatz 312 der Schiebeeinheit 311 sich entlang der Seitenfläche 313 der magnetischen Einheit 306 in die Ausnehmung 304 der Basiseinheit 301 erstreckt.

Die Schiebeeinheit 311 ist in Richtung der Öffnung 305 der Ausnehmung 304 vorgespannt. Hierzu weist die zweite Verschlusseinheit 300 ein Federelement 314 auf. Das Federelement 314 ist mit einem ersten Ende 315 und mit einem zweiten 316 versehen. Das erste Ende 315 des Federelements 314 stützt sich an der Schiebeeinheit 311 ab. Hingegen stützt sich das zweite Ende 316 des Federelements 314 an einer Abstützwand 317 der zweiten Halteeinrichtung 302 ab. Das Federelement 314 ist beispielsweise als Schraubenfeder ausgebildet. Die Erfindung ist allerdings nicht auf die Verwendung einer Schraubenfeder eingeschränkt. Vielmehr kann als Federelement 314 jegliche Art von Feder und jegliches Federmaterial verwendet werden, welche(s) für die Erfindung geeignet ist.

Durch die von dem Federelement 314 bereitgestellte Federspannung ist die Schiebeeinheit 311 entlang der Wandung 303 der Basiseinheit 301, die gleichzeitig die Wandung 303 der Ausnehmung 304 ist, in der Ausnehmung 304 in eine Öffnungsposition und in eine Verschlussposition verschiebbar. Mit anderen Worten ausgedrückt, kann die Schiebeeinheit 311 in zwei Positionen bewegt werden, nämlich in eine erste Position in Form einer Öffnungsposition und in eine zweite Position in Form einer Verschlussposition, wobei die Schiebeeinheit 311 entlang der Wandung 303 der Ausnehmung 304 geführt wird.

Bei der hier dargestellten Ausführungsform der erfindungsmäßen Verschlussvorrichtung 100 ist die Ausdehnung D1 der Ausnehmung 304 größer als die Ausdehnung D2 der Öffnung 305 der Basiseinheit 301. Dabei ist die Ausdehnung D1 der Ausnehmung 304 durch den Abstand zweier sich gegenüberliegender Punkte der Wandung 303 gegeben, wobei der Abstand die Länge einer Geraden ist, die senkrecht zu einer Längsachse der Basiseinheit 301 ausgerichtet ist. Beispielsweise ist die Längsachse die Rotationsachse 318 der Basiseinheit 301. Die Längsachse verläuft durch die Ausnehmung 304 und durch die Öffnung 305. Wie aus der **Figur** 2 ersichtlich, wird die Ausdehnung D1 der Ausnehmung 304 ohne Berücksichtigung des Fortsatzes 312 der Schiebeeinheit 311 bestimmt. Die Ausdehnung D2 der Öffnung 305 ist durch den Abstand zweier sich gegenüberliegender Punkte der Begrenzung der Öffnung 305 gegeben, wobei der Abstand die Länge einer Geraden ist, die senkrecht zu der Längsachse ausgerichtet ist, wobei auch hier die Längsachse beispielsweise die Rotationsachse 318 ist. Insbesondere ist es vorgesehen, dass die Öffnung 305 kreisförmig und/oder zylinderförmig ausgebildet ist. Zusätzlich oder alternativ hierzu ist es vorgesehen, dass die Ausnehmung 304 zylinderförmig ausgebildet ist. Wenn wie bei der in **Figur 2** dargestellten Ausführungsform sowohl die Öffnung 305 als auch die Ausnehmung 304 im Querschnitt kreisförmig ausgebildet sind, dann entspricht bei dieser Ausführungsform die Ausdehnung D1 der Ausnehmung 304 einem ersten Durchmesser und die Ausdehnung D2 der Öffnung 305 einem zweiten Durchmesser. Der erste Durchmesser der Ausnehmung 304 ist größer als der zweite Durchmesser der Öffnung 305.

Wie oben geschildert, kann die Schiebeeinheit 311 in zwei Positionen bewegt werden, nämlich in die erste Position in Form der Öffnungsposition und in die zweite Position in Form der Verschlussposition. Um die Schiebeeinheit 311 in die Öffnungsposition zu bewegen, wird das kugelförmige Eingriffsteil 201 der ersten Verschlusseinheit 200 an der Öffnung 305 der Ausnehmung 304 angesetzt. Aufgrund der zwischen dem kugelförmigen Eingriffsteil 201 und der magnetischen Einheit 306 wirkenden magnetischen Anziehungskraft wird das kugelförmige Eingriffsteil 201 durch die Öffnung 305 der Ausnehmung 304 in Richtung der magnetischen Einheit 306 gezogen. Dabei bewegt das kugelförmige Eingriffsteil 201 den Fortsatz 312 der Schiebeeinheit 311 aus der Ausnehmung 304 heraus. Mit anderen Worten ausgedrückt, bewegt das kugelförmige Eingriffsteil 201 die Schiebeeinheit 311 in Richtung der zweiten Halteeinrichtung 302. Die Schiebeeinheit 311 befindet sich im Anschluss an diese Bewegung in der Öffnungsposition. In der Öffnungsposition der Schiebeeinheit 311 ist das kugelförmige Eingriffsteil 201 in die Ausnehmung 304 der Basiseinheit 301 einführbar und aufnehmbar.

Sobald das kugelförmige Eingriffsteil 201 in der Ausnehmung 304 der Basiseinheit 301 aufgenommen ist, wird der Fortsatz 312 der Schiebeeinheit 311 aufgrund der Vorspannung der Schiebeeinheit 311 in Richtung der Öffnung 305 der Ausnehmung 304 bewegt. Dabei bewegt der Fortsatz 312 der Schiebeeinheit 311 das kugelförmige Eingriffsteil 201 derart in Richtung der dem Fortsatz 312 der Schiebeeinheit 311 gegenüberliegenden Wandung 303, dass das kugelförmige Eingriffsteil 201 zwischen der Wandung 303 und dem Fortsatz 312 der Schiebeeinheit 311 angeordnet ist. Dies ist die Verschlussposition der Schiebeeinheit 311. In der Verschlussposition der Schiebeeinheit 311 begrenzt der Fortsatz 312 der Schiebeeinheit 311 die Ausdehnung D1 der Ausnehmung 304. Ferner liegt in der Verschlussposition der Schiebeeinheit 311 das kugelförmige Eingriffsteil 201 der ersten Verschlusseinheit 200 sowohl an der Wandung 303 der Ausnehmung 304 der Basiseinheit 301 der zweiten Verschlusseinheit 300 als auch an der Schiebeeinheit 311 an. Das kugelförmige Eingriffsteil 201 ist dann klemmend zwischen der Wandung 303 der Ausnehmung 304 und dem Fortsatz 312 der Schiebeeinheit 311 gehalten. Ferner liegt das kugelförmige Eingriffsteil 201 dann an der ersten Außenseite 308 der magnetischen Einheit 306 an. Der Fortsatz 312 der Schiebeeinheit 311 verschließt die Öffnung 305 teilweise derart, dass ein Austreten des kugelförmigen Eingriffsteils 201 in der Verschlussposition der Schiebeeinheit 311 aus der Öffnung 305 nicht möglich ist.

In der Verschlussposition der Schiebeeinheit 311 sind das kugelförmige Eingriffsteil 201 und demnach die erste Verschlusseinheit 200 in der Ausnehmung 304 der Basiseinheit 301 drehbar gehalten. Insbesondere ist bei dieser Ausführungsform der erfindungsgemäßen Verschlussvorrichtung 100 vorgesehen, dass das kugelförmige Eingriffsteil 201 der ersten Verschlusseinheit 200 eine sich in Richtung der ersten Halteeinrichtung 202 und entlang des zylinderförmigen Stabes 203 erstreckende Längsachse 205 aufweist. Beispielsweise ist das kugelförmige Eingriffsteil 201 um diese Längsachse 205 um bis zu 360° drehbar. Somit sind eine besonders gute Relativbewegung der ersten Verschlusseinheit 200 zur zweiten Verschlusseinheit 300 und somit auch eine besonders gute Relativbewegung des ersten Teils zum zweiten Teil sichergestellt, wobei das erste Teil mit dem zweiten Teil über die Verschlussvorrichtung 100 lösbar verbunden ist.

Das kugelförmige Eingriffsteil 201 und somit auch die erste Verschlusseinheit 200 sind darüber hinaus insbesondere entlang einer Mantelfläche eines Kegels drehbar in der Ausnehmung 304 gehalten, wobei eine Drehachse 206 des kugelförmigen Eingriffsteils 201 durch eine Spitze des Kegels verläuft und wobei die Spitze des Kegels am Mittelpunkt des kugelförmigen Eingriffsteils 201 angeordnet ist. Die Drehachse 206 verläuft ebenfalls durch den Mittelpunkt des kugelförmigen Eingriffsteils 201 und ist darüber hinaus senkrecht zur Längsachse 205 ausgerichtet. Beispielsweise beträgt der halbe Öffnungswinkel des Kegels bis zu 45°. Mit anderen Worten ausgedrückt, kann das kugelförmige Eingriffsteil 201 und somit auch die erste Verschlusseinheit 200 in einem Winkel von bis zu 45° verschwenkt werden. Ferner kann sich das kugelförmige Eingriffsteil 201 und somit auch die erste Verschlusseinheit 200 entlang der Mantelfläche des Kegels und innerhalb des Bereichs des Kegels, welcher von der Mantelfläche umschlossen wird, bewegen.

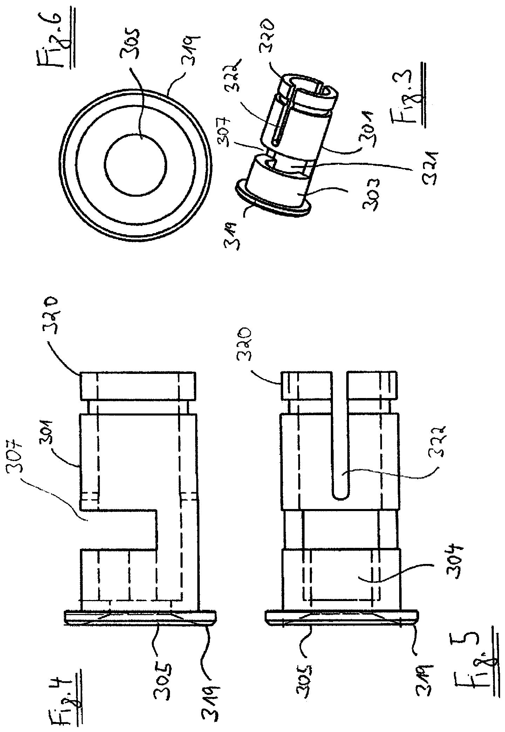

Nachfolgend wird auf die **Figuren 3 bis 6** näher eingegangen. **Figur 3** zeigt eine schematische Darstellung der zweiten Verschlusseinheit 300. Genauer gesagt, zeigt **Figur 3** eine schematische Darstellung der Basiseinheit 301 der zweiten Verschlusseinheit 300. **Figur 4** zeigt eine erste Seitenansicht der Basiseinheit 301 nach **Figur 3. Figur 5** zeigt eine zweite, um 90° zur ersten Seitenansicht nach **Figur 4** gedrehte Seitenansicht der Basiseinheit 301. **Figur 6** zeigt eine schematische Darstellung einer dritten, um 90° zur ersten Seitenansicht nach **Figur 4** gedrehte Seitenansicht der Basiseinheit 301.

Wie oben bereits erwähnt, ist die Basiseinheit 301 hülsenförmig ausgebildet. Die Basiseinheit 301 weist einen von der Wandung 303 umschlossenen Innenraum 321 auf. Die Ausnehmung 304 ist im Innenraum 321 im Bereich eines ersten Endes 319 der Basiseinheit 301 angeordnet. Ferner ist am ersten Ende 319 der Basiseinheit 301 die Öffnung 305 der Ausnehmung 304 angeordnet. Die Öffnung 305 ist an ihren Rändern leicht angefast, damit das kugelförmige Eingriffsteil 201 gut durch die Öffnung 305 in die Ausnehmung 304 einführbar ist. Zusätzlich zu dem ersten Ende 319 weist die Basiseinheit 301 ein zweites Ende 320 auf, an welchem die zweite Halteeinrichtung 302 angeordnet ist (in den **Figuren 3 bis 5** nicht dargestellt).

Wie ebenfalls bereits weiter oben erwähnt, weist die Basiseinheit 301 die Wandungsausnehmung 307 auf, in welcher die magnetische Einheit 306 klemmend gehalten ist und von welcher aus die magnetische Einheit 306 in die Ausnehmung 304 der Basiseinheit 301 hineinragt. Die Wandungsausnehmung 307 ist bei dieser Ausführungsform als Schlitz ausgebildet, in welchem die magnetische Einheit 306 kraft- und formschlüssig angeordnet ist. Die Wandungsausnehmung 307 ist demnach als Halterung für die magnetische Einheit 306 ausgebildet.

Die Basiseinheit 301 weist Schlitzführungen 322 auf, welche sich vom Bereich der Wandungsausnehmung 307 in Richtung des zweiten Endes 320 der Basiseinheit 301 erstrecken. In den Schlitzführungen 322 sind Stifte 323 geführt, wobei die Stifte 323 zum einen an der Schiebeeinheit 311 und zum anderen an einer zweiten Betätigungseinrichtung 324 angeordnet sind. Die zweite Betätigungseinrichtung 324 ist an einem äußeren Umfang der Basiseinheit 301 verschiebbar angeordnet. Genauer gesagt, ist die zweite Betätigungseinrichtung 324 von einer Ruheposition, die in **Figur 1** dargestellt ist, in eine Freigabeposition in Richtung der zweiten Halteeinrichtung 302 bewegbar. Bei der Bewegung der zweiten Betätigungseinrichtung 324 in Richtung der zweiten Halteeinrichtung 302 wird aufgrund eines Zusammenwirkens der zweiten Betätigungseinrichtung 324 mit der Schiebeeinheit 311 über die Stifte 323 die Schiebeeinheit 311 in Richtung der zweiten Halteeinrichtung 302 bewegt. Hierdurch wird der Fortsatz 312 der Schiebeeinheit 311 von dem kugelförmigen Eingriffsteil 201 gelöst und aus der Ausnehmung 304 derart bewegt, dass das kugelförmige Eingriffsteil 201 freigegeben und durch die Öffnung 305 aus der Ausnehmung 304 geführt wird. Auf diese Art und Weise wird die erste Verschlusseinheit 200 und das hieran angeordnete erste Teil wieder von der zweiten Verschlusseinheit 300 und dem hieran angeordneten zweiten Teil getrennt und gelöst. Diese Ausführungsform der erfindungsgemäßen Verschlussvorrichtung 100 gewährleistet ein besonders einfaches Lösen des ersten Teils vom zweiten Teil durch Betätigen der zweiten Betätigungseinrichtung 324, insbesondere unter Volllast.

Bei der in den **Figuren 1 bis 6** dargestellten Ausführungsform der erfindungsgemäßen Verschlussvorrichtung 100 ist es zusätzlich oder alternativ vorgesehen, dass die Schiebeeinheit 311 an einer ersten Betätigungseinrichtung 325 angeordnet ist (vgl. **Figur 2****).** Beispielsweise ist die erste Betätigungseinrichtung 325 an der Schiebeeinheit 311 befestigt und ist durch Öffnungen an der Abstützwand 317 und der zweiten Halteeinrichtung 302 aus der Verschlussvorrichtung 100 hinaus geführt. Beispielsweise ist die erste Betätigungseinrichtung 325 als ein Bowdenzug ausgebildet. Diese Ausführungsform der erfindungsgemäßen Verschlussvorrichtung 100 gewährleistet ein besonders einfaches Lösen des ersten Teils vom zweiten Teil durch Betätigen der ersten Betätigungseinrichtung 325, insbesondere unter Volllast.

Die erfindungsgemäße Verschlussvorrichtung 100 weist den Vorteil auf, dass sie durch ihre besondere Ausbildung, insbesondere aufgrund der Verwendung des kugelförmigen Eingriffsteils 201 der ersten Verschlusseinheit 200, ein Lösen des ersten Teils von dem zweiten Teil unter Volllast sicherstellt. Zusätzlich ist ein sicherer Halt des kugelförmigen Eingriffsteils 201 der ersten Verschlusseinheit 200 in der Ausnehmung 304 der zweiten Verschlusseinheit 300 aufgrund der Schiebeeinheit 311 sichergestellt, und zwar insbesondere durch eine formschlüssige Verbindung der Schiebeeinheit 311 mit dem kugelförmigen Eingriffsteil 201 der ersten Verschlusseinheit 200 und insbesondere durch eine formschlüssige Verbindung des kugelförmigen Eingriffsteils 201 mit der Wandung 303 der Ausnehmung 304. Ferner ist eine Relativbewegung des ersten Teils zum zweiten Teil in der Schließstellung der erfindungsgemäßen Verschlussvorrichtung 100 möglich.

Die erfindungsgemäße Verschlussvorrichtung 100 ist in zahlreichen Bereichen des täglichen Lebens verwendbar. Wenn ein Gegenstand, beispielsweise ein Zubehörteil, ein Ausrüstungsgegenstand und/oder ein Werkzeug, nicht zur ständigen Befestigung an einer Person und/oder einem weiteren Gegenstand vorgesehen ist, wird mittels der erfindungsgemäßen Verschlussvorrichtung 100 eine einfache und zuverlässige sowie lösbare Befestigung des Gegenstands an der Person und/oder dem weiteren Gegenstand bereitgestellt. Beispielsweise dient die erfindungsgemäße Verschlussvorrichtung 100 zur lösbaren Befestigung von Ausrüstungsgegenständen beispielsweise an einem Fahrrad, an einem Rollstuhl oder an einem Kinderwagen. Auch bei Hundeleinen, bei der Takelage von Segelschiffen, bei der Befestigung von Segeln beim Surfen oder beim Kiten, bei der Befestigung von Gegenständen im Tauchsport, bei der Befestigung von Gegenständen im Jagdbereich, bei der Befestigung von Ausrüstungsgegenständen im militärischen Bereich, beim Pferdesport, beim Trekking, beim Fallschirmspringen und/oder allgemein in der Luft- und Raumfahrttechnik ist die erfindungsgemäße Verschlussvorrichtung 100 verwendbar. Ferner ist die erfindungsgemäße Verschlussvorrichtung 100 auch zur lösbaren Befestigung von Werkzeugen beispielsweise an Tragwesten geeignet. Auch in der Bautechnik ist die erfindungsgemäße Verschlussvorrichtung 100 zur lösbaren Befestigung von Seilen zur Führung von Bauteilen verwendbar. Die vorgenannte Aufzählung von Verwendungsmöglichkeiten der erfindungsgemäßen Verschlussvorrichtung 100 ist nicht abschließend zu verstehen, sondern nur beispielhaft. Demnach ist die erfindungsgemäße Verschlussvorrichtung 100 für jegliche Anwendung verwendbar, für welche die erfindungsgemäße Verschlussvorrichtung 100 geeignet ist, insbesondere im Bereich des Sports, der Seefahrt, der Tierwelt und der Industrie.

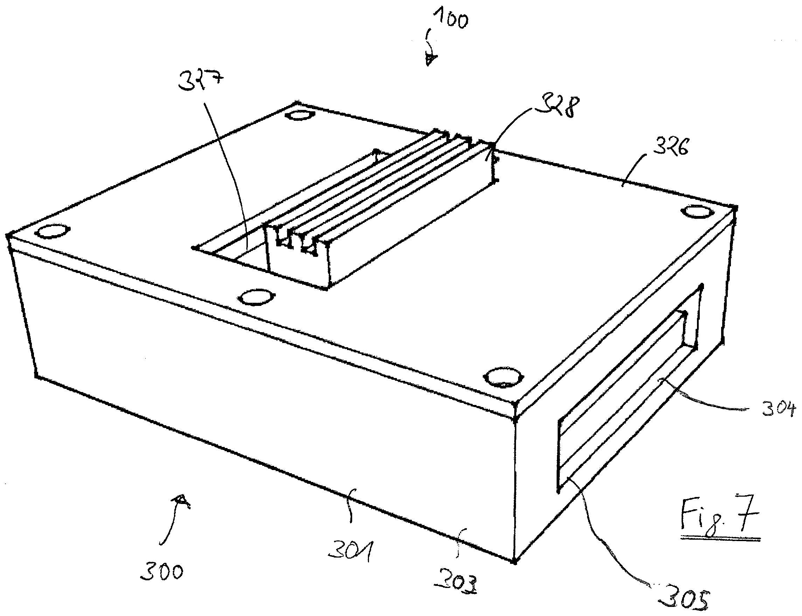

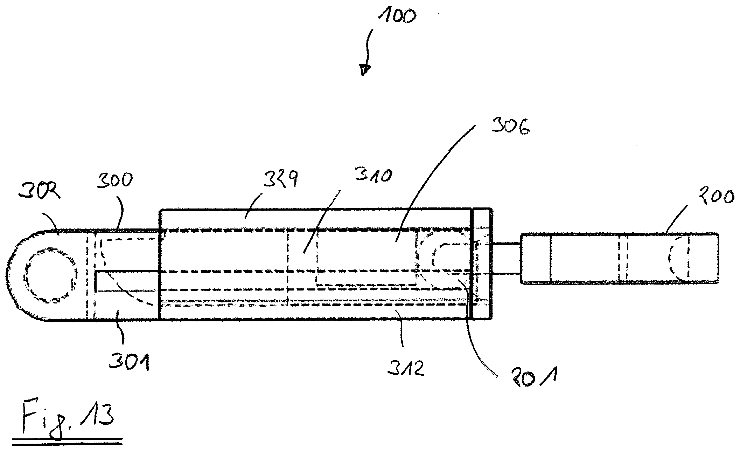

**Figur 7** zeigt eine schematische Darstellung einer Ausführungsform einer zweiten Verschlusseinheit 300 einer weiteren erfindungsgemäßen Verschlussvorrichtung 100. Die zweite Verschlusseinheit 300 der weiteren erfindungsgemäßen Verschlussvorrichtung 100 ist mit einer Basiseinheit 301 (vgl. **Figuren 7****,** **9****,** **10** **und** **13****)** sowie mit einer an der Basiseinheit 301 angeordneten zweiten Halteeinrichtung 302 versehen (vgl. **Figur 13****).**

Die Basiseinheit 301 der zweiten Verschlusseinheit 300 ist bei der hier dargestellten Ausführungsform der weiteren erfindungsgemäßen Verschlussvorrichtung 100 rechteckförmig ausgebildet. Die Erfindung ist aber auf die vorgenannte Ausbildung der Basiseinheit 301 nicht eingeschränkt. Vielmehr kann die Basiseinheit 301 jegliche Ausbildung aufweisen, welche für die Erfindung geeignet ist, beispielsweise eine zylinderförmige Ausbildung, eine quaderförmige Ausbildung und/oder auch eine kugelförmige Ausbildung.

Die zweite Halteeinrichtung 302 ist beispielsweise ösenförmig ausgebildet und dient der Anordnung des zweiten Teils, welches lösbar mit dem ersten Teil verbunden wird. Beispielsweise kann/können an der zweiten Halteeinrichtung 302 ein Gurt und/oder ein Karabinerhaken angeordnet sein. Die Erfindung ist aber auf derartige zweite Teile nicht eingeschränkt. Vielmehr kann an der zweiten Halteeinrichtung 302 jegliches zweite Teil angeordnet werden, welches mit dem ersten Teil lösbar verbunden wird.

Die Basiseinheit 301 der zweiten Verschlusseinheit 300 der weiteren erfindungsgemäßen Verschlussvorrichtung 100 weist eine Wandung 303 auf, die eine Ausnehmung 304 zur Aufnahme eines Eingriffsteils 201 (in **Figur 7** nicht dargestellt) der ersten Verschlusseinheit 200 begrenzt. Die Ausnehmung 304 der Basiseinheit 301 ist im Grunde in einem Innenraum der Basiseinheit 301 angeordnet. Ferner weist die Ausnehmung 304 der Basiseinheit 301 eine Öffnung 305 auf (vgl. **Figuren 7****,** **9** **und** **10****).** Das Eingriffsteil 201 ist zum Schließen der weiteren erfindungsgemäßen Verschlussvorrichtung 100 in der Ausnehmung 304 der Basiseinheit 301 in einer Schließstellung der weiteren erfindungsgemäßen Verschlussvorrichtung 100 gehalten.

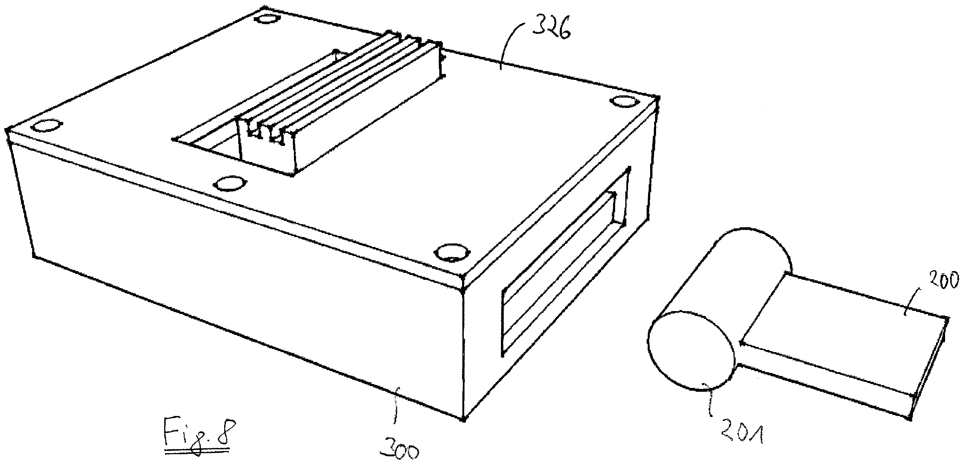

Das Eingriffsteil 201 ist mit einem Radius versehen. Das Eingriffsteil 201 ist kugelförmig ausgebildet. Bei einer Ausführungsform weist das Eingriffsteil mindestens einen Kugelkopf oder mindestens zwei Kugelköpfe auf. Bei einer weiteren Ausführungsform ist das Eingriffsteil 201 stabförmig ausgebildet (vgl. **Figur 8****).** Das Eingriffsteil 201 der weiteren erfindungsgemäßen Verschlussvorrichtung 100 ist beispielsweise teilweise oder vollständig als Permanentmagnet ausgebildet. Beispielsweise ist das Eingriffsteil 201 zumindest teilweise aus einem Magneten gebildet, der zumindest teilweise aus Neodym gebildet ist. Die Erfindung ist aber auf das vorgenannte Material hinsichtlich eines Magneten nicht eingeschränkt. Vielmehr sind für die weitere erfindungsmäße Verschlussvorrichtung 100 jegliche magnetischen Materialen verwendbar, welche für die Erfindung geeignet sind. Bei einer weiteren Ausführungsform ist das Eingriffsteil 201 aus Eisen gebildet, das ferromagnetisch ist.

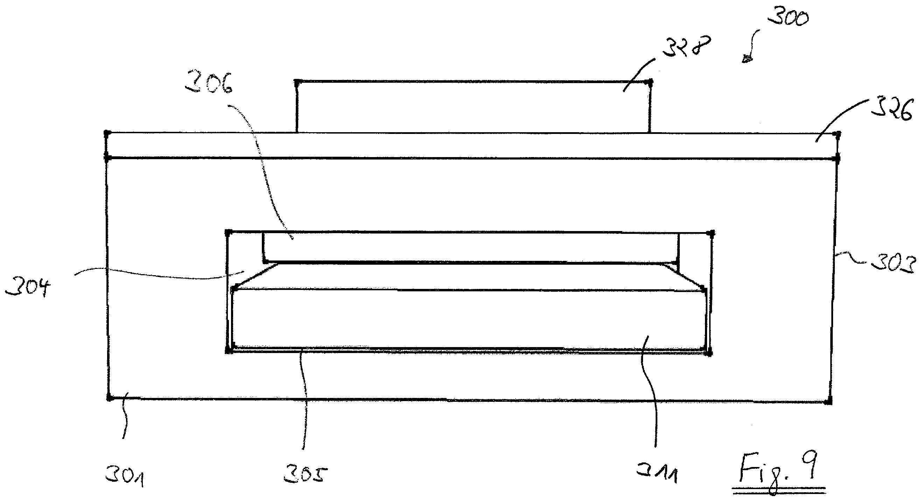

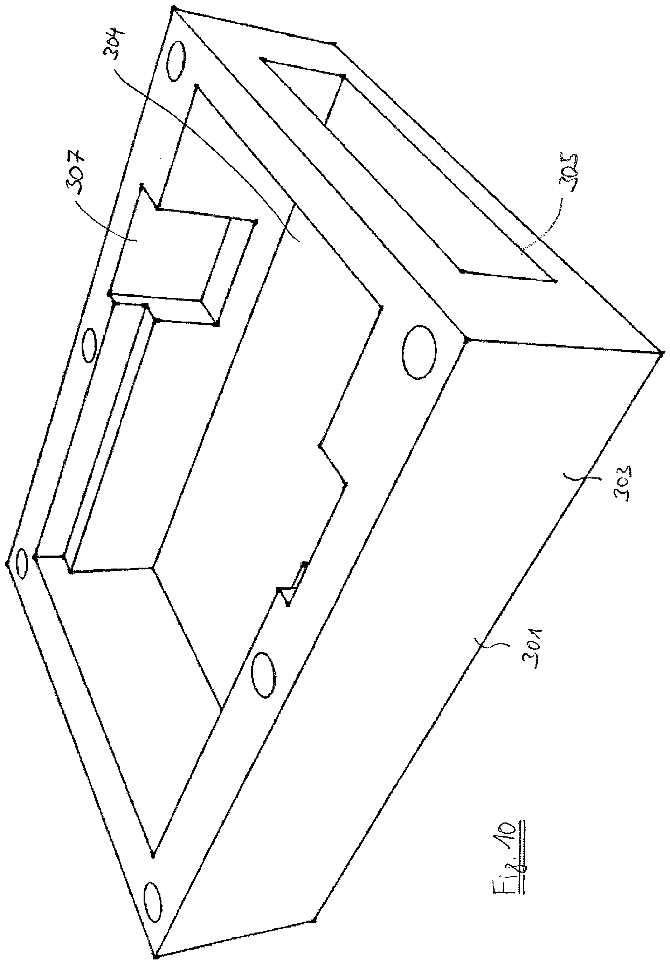

Ferner ist in der und an der Ausnehmung 304 der Basiseinheit 301 eine magnetische Einheit 306 angeordnet (vgl. **Figuren 9** **und** **13****).** Hierzu weist die Basiseinheit 301 eine Wandungsausnehmung 307 auf, in welcher die magnetische Einheit 306 klemmend gehalten ist und von welcher aus die magnetische Einheit 306 in die Ausnehmung 304 der Basiseinheit 301 hineinragt (vgl. **Figur 10****).** Die Wandungsausnehmung 307 ist bei dieser Ausführungsform als Schlitz ausgebildet, in welchem die magnetische Einheit 306 kraft- und formschlüssig angeordnet ist. Die Wandungsausnehmung 307 ist demnach als Halterung für die magnetische Einheit 306 ausgebildet. Die magnetische Einheit 306 begrenzt bei dieser Ausführungsform die Ausnehmung 304. Beispielweise ist die magnetische Einheit 306 als Permanentmagnet ausgebildet. Insbesondere ist es vorgesehen, dass die magnetische Einheit 306 aus einem Magneten gebildet ist, der zumindest teilweise aus Neodym gebildet ist. Die Erfindung ist aber nicht auf das vorgenannte Material hinsichtlich eines Magneten beschränkt. Vielmehr sind für die weitere erfindungsmäße Verschlussvorrichtung 100 jegliche magnetischen Materialien verwendbar, welche für die Erfindung geeignet sind.

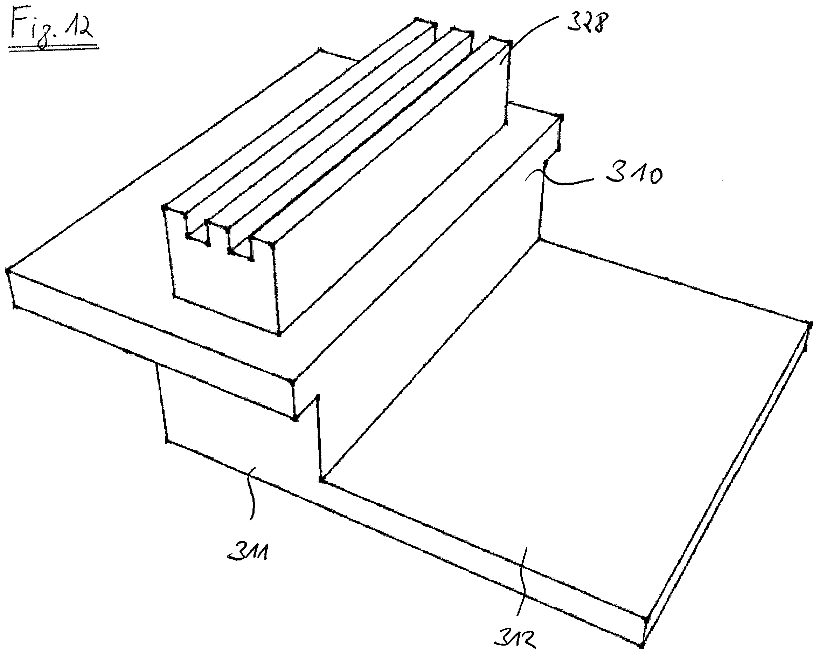

Die magnetische Einheit 306 der weiteren erfindungsgemäßen Verschlussvorrichtung 100 weist eine erste Außenseite und eine zweite Außenseite auf. Die erste Außenseite ist zur Öffnung 305 der Ausnehmung 304 der Basiseinheit 301 gerichtet. Hingegen ist die zweite Außenseite der ersten Außenseite gegenüberliegend angeordnet. Bei der hier dargestellten Ausführungsform ist es vorgesehen, dass die erste Außenseite und die zweite Außenseite der magnetischen Einheit 306 beabstandet zueinander angeordnet sind. An der zweiten Außenseite ist ein Basisteil 310 einer Schiebeeinheit 311 angeordnet (vgl. **Figuren 12** **und** **13****).** Die Schiebeeinheit 311 weist einen Fortsatz 312 auf, der sich entlang einer Seitenfläche der magnetischen Einheit 306 in Richtung der Öffnung 305 der Ausnehmung 304 erstreckt (vgl. **Figuren 12** **und** **13****).** Der Fortsatz 312 der Schiebeeinheit 311 ist an dem Basisteil 310 der Schiebeeinheit 311 angeordnet, beispielsweise einstückig an dem Basisteil 310 angeformt. Die Seitenfläche der magnetischen Einheit 306 ist beispielsweise senkrecht oder im Wesentlichen senkrecht zur ersten Außenseite und zur zweiten Außenseite der magnetischen Einheit 306 ausgerichtet. Die Ausdehnung der magnetischen Einheit 306 entlang einer Geraden, die senkrecht zu einer Längsachse in Form einer Symmetrieachse der Basiseinheit 301 ausgerichtet ist, ist dabei derart gewählt, dass sich die magnetische Einheit 306 nicht entlang einer gesamten Ausdehnung der Ausnehmung 304 entlang dieser Geraden erstreckt, sondern nur derart in der Ausnehmung 304 angeordnet ist, dass der Fortsatz 312 der Schiebeeinheit 311 sich entlang der Seitenfläche der magnetischen Einheit 306 in die Ausnehmung 304 der Basiseinheit 301 erstreckt.

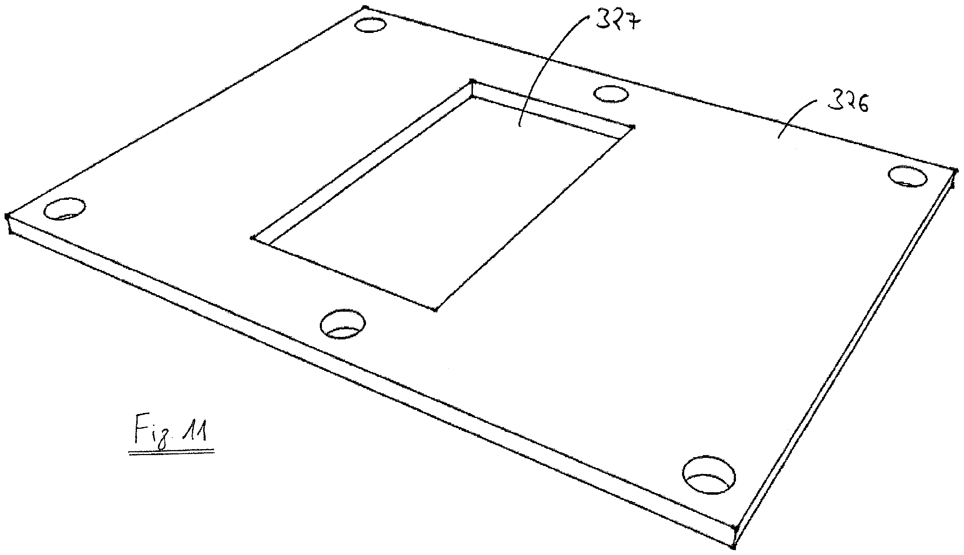

Die Basiseinheit 301 weist eine Deckeleinheit 326 auf (vgl. insbesondere **Figuren 7** **und** **11****).** Die Deckeleinheit 326 ist Teil der Wandung 303 der Ausnehmung 304 und weist eine Öffnung 327 auf, durch die sich eine Führungseinrichtung 328 der Schiebeeinheit 311 erstreckt.

Die Schiebeeinheit 311 ist in Richtung der Öffnung 305 der Ausnehmung 304 vorgespannt. Hierzu weist die zweite Verschlusseinheit 300 ein Federelement auf (nicht dargestellt). Das Federelement ist mit einem ersten Ende und mit einem zweiten Ende versehen. Das erste Ende des Federelements stützt sich an der Schiebeeinheit 311 ab. Hingegen stützt sich das zweite Ende des Federelements an einer Abstützwand der Basiseinheit 301 ab. Das Federelement ist beispielsweise als Schraubenfeder ausgebildet. Die Erfindung ist allerdings nicht auf die Verwendung einer Schraubenfeder eingeschränkt. Vielmehr kann als Federelement jegliche Art von Feder und jegliches Federmaterial verwendet werden, welche(s) für die Erfindung geeignet ist.

Durch die von dem Federelement bereitgestellte Federspannung ist die Schiebeeinheit 311 entlang der Wandung 303 der Basiseinheit 301, die gleichzeitig die Wandung 303 der Ausnehmung 304 ist, in der Ausnehmung 304 in eine Öffnungsposition und in eine Verschlussposition verschiebbar. Mit anderen Worten ausgedrückt, kann die Schiebeeinheit 311 in zwei Positionen bewegt werden, nämlich in eine erste Position in Form einer Öffnungsposition und in eine zweite Position in Form einer Verschlussposition, wobei die Schiebeeinheit 311 entlang der Wandung 303 der Ausnehmung 304 geführt wird.

Wie oben geschildert, kann die Schiebeeinheit 311 in zwei Positionen bewegt werden, nämlich in die erste Position in Form der Öffnungsposition und in die zweite Position in Form der Verschlussposition. Um die Schiebeeinheit 311 in die Öffnungsposition zu bewegen, wird das Eingriffsteil 201, beispielsweise das stabförmige Eingriffsteil 201 der ersten Verschlusseinheit 200 (vgl. **Figur 8****)** an der Öffnung 305 der Ausnehmung 304 angesetzt. Aufgrund der zwischen dem Eingriffsteil 201 und der magnetischen Einheit 306 wirkenden magnetischen Anziehungskraft wird das Eingriffsteil 201 durch die Öffnung 305 der Ausnehmung 304 in Richtung der magnetischen Einheit 306 gezogen. Dabei bewegt das Eingriffsteil 201 den Fortsatz 312 der Schiebeeinheit 311 aus der Ausnehmung 304 heraus. Mit anderen Worten ausgedrückt, bewegt das Eingriffsteil 201 die Schiebeeinheit 311 in eine zur Ausnehmung 304 entgegengesetzten Richtung. Die Schiebeeinheit 311 befindet sich im Anschluss an diese Bewegung in der Öffnungsposition. In der Öffnungsposition der Schiebeeinheit 311 ist das Eingriffsteil 201 in die Ausnehmung 304 der Basiseinheit 301 einführbar und aufnehmbar.

Sobald das Eingriffsteil 201 in der Ausnehmung 304 der Basiseinheit 301 aufgenommen ist, wird der Fortsatz 312 der Schiebeeinheit 311 aufgrund der Vorspannung der Schiebeeinheit 311 in Richtung der Öffnung 305 der Ausnehmung 304 bewegt. Dabei bewegt der Fortsatz 312 der Schiebeeinheit 311 das Eingriffsteil 201 derart in Richtung der dem Fortsatz 312 der Schiebeeinheit 311 gegenüberliegenden Wandung der Ausnehmung 304 in Form der Wandung der Deckeleinheit 326, dass das Eingriffsteil 201 zwischen der Wandung der Deckeleinheit 326 und dem Fortsatz 312 der Schiebeeinheit 311 angeordnet ist. Dies ist die Verschlussposition der Schiebeeinheit 311. In der Verschlussposition der Schiebeeinheit 311 begrenzt der Fortsatz 312 der Schiebeeinheit 311 die Ausdehnung der Ausnehmung 304. Ferner liegt in der Verschlussposition der Schiebeeinheit 311 das Eingriffsteil 201 der ersten Verschlusseinheit 200 sowohl an der Wandung der Deckeleinheit 326 als auch an der Schiebeeinheit 311 an. Das Eingriffsteil 201 ist dann klemmend zwischen der Wandung der Deckeleinheit 326 und dem Fortsatz 312 der Schiebeeinheit 311 gehalten. Ferner liegt das Eingriffsteil 201 dann an der ersten Außenseite der magnetischen Einheit 306 an. Der Fortsatz 312 der Schiebeeinheit 311 verschließt die Öffnung 305 teilweise derart, dass ein Austreten des Eingriffsteils 201 in der Verschlussposition der Schiebeeinheit 311 aus der Öffnung 305 nicht möglich ist.

In der Verschlussposition der Schiebeeinheit 311 sind das Eingriffsteil 201 und demnach die erste Verschlusseinheit 200 in der Ausnehmung 304 der Basiseinheit 301 gehalten.

Um die weitere erfindungsgemäße Verschlussvorrichtung 100 zu öffnen, wird die Schiebeeinheit 311 mittels der Führungseinrichtung 328, an der eine Schiebeeinrichtung 329 angeordnet ist, in die Öffnungsposition bewegt. Mit anderen Worten ausgedrückt, wird die Schiebeeinrichtung 329 beispielsweise durch Schieben betätigt, so dass die Führungseinrichtung 328 die Schiebeeinheit 311 bewegt. Die Schiebeeinrichtung 329 ist beispielsweise an einer Außenseite der Basiseinheit 301 angeordnet. Dann kann das Eingriffsteil 201 wieder durch die Öffnung 305 aus der Ausnehmung 304 entfernt werden, da keine oder nur eine geringfügige Klemmkraft auf das Eingriffsteil 201 einwirkt.

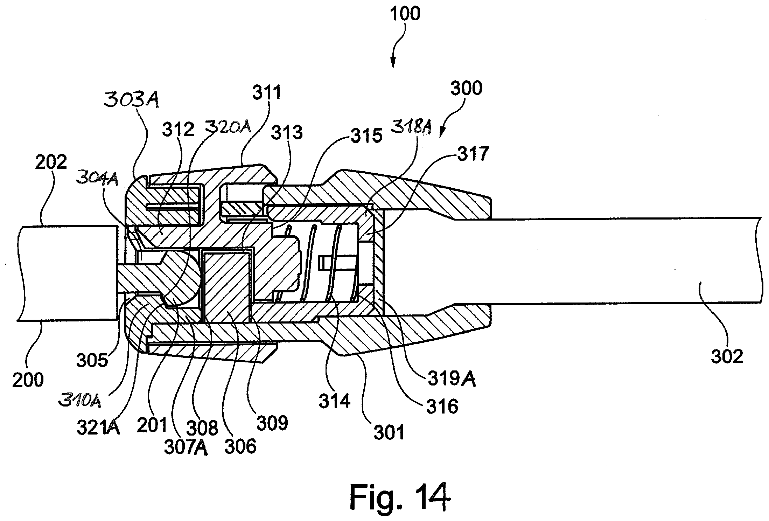

**Figur 14** zeigt eine noch weitere Ausführungsform der erfindungsgemäßen Verschlussvorrichtung 100. Die Verschlussvorrichtung 100 weist eine erste Verschlusseinheit 200 auf, wobei die erste Verschlusseinheit 200 ein Eingriffsteil 201 und eine an dem Eingriffsteil 201 angeordnete erste Halteeinrichtung 202 zur Anordnung des ersten Teils aufweist. Mit anderen Worten ausgedrückt, wird an der ersten Halteeinrichtung 202 das erste Teil angeordnet, welches mit dem zweiten Teil lösbar verbunden werden soll. Das Eingriffsteil 201 weist einen Kugelkopf auf, an welchem die erste Halteeinrichtung 202 angeordnet ist. Beispielsweise ist die erste Halteeinrichtung 202 zumindest teilweise stabförmig ausgebildet.

Ferner weist die Verschlussvorrichtung 100 eine zweite Verschlusseinheit 300 auf, die eine Basiseinheit 301 aufweist. An der Basiseinheit 301 ist eine zweite Halteeinrichtung 302 zur Anordnung des zweiten Teils angeordnet. Darüberhinaus ist an einem Ende der Basiseinheit 301 eine Endkappe 303A angeordnet. Die Endkappe 303A weist einen Hohlraum 304A auf, der eine Ausnehmung bildet.

Die Endkappe 303A weist einen im Wesentlichen umlaufenden Steg 307A auf, welcher in die Basiseinheit 301 der zweiten Verschlusseinheit 300 hineinragt und welcher die den Hohlraum 304A umgebende Wand bildet. Die den Hohlraum 304A umgebende Wand bildet die Wandung der Ausnehmung. Der Hohlraum 304A in Form der Ausnehmung dient zur Aufnahme des Eingriffsteils 201 der ersten Verschlusseinheit 200.

Die Endkappe 303A weist auch eine Öffnung 305 auf. Die Öffnung 305 dient zur Einführung des Eingriffsteils 201 der ersten Verschlusseinheit 200, wobei das Eingriffsteil 201 der ersten Verschlusseinheit 200 zum Schließen der Verschlussvorrichtung 100 in dem Hohlraum 304A in Form der Ausnehmung der zweiten Verschlusseinheit 300 in einer Schließstellung der Verschlussvorrichtung 100 gehalten ist.

In dem Hohlraum 304A in Form der Ausnehmung der zweiten Verschlusseinheit 300 ist eine Schiebeeinheit 311 angeordnet. Die Schiebeeinheit 311 ist in Richtung der Öffnung 305 vorgespannt. Hierzu weist die zweite Verschlusseinheit 300 ein Federelement 314 auf. Das Federelement 314 ist mit einem ersten Ende 315 und mit einem zweiten Ende 316 versehen. Das erste Ende 315 des Federelements 314 stützt sich an der Schiebeeinheit 311 ab. Hingegen stützt sich das zweite Ende 315 des Federelements 314 an einer Abstützwand 317 der zweiten Verschlusseinheit 300 ab. Diese Ausführungsform der Verschlussvorrichtung 100 gewährleistet mit einfachen und preiswerten Mitteln eine besonders gute Vorspannung der Schiebeeinheit 311 in Richtung der Öffnung 305. Beispielsweise ist das Federelement 314 als Schraubenfeder ausgebildet. Die Erfindung ist allerdings nicht auf die Verwendung einer Schraubenfeder eingeschränkt. Vielmehr kann als Federelement 314 jegliche Art von Feder und jegliches Federmaterial verwendet werden, welche(s) für die Erfindung geeignet ist.

Bei einer weiteren Ausführungsform wird die Abstützwand 317 nicht durch eine die Abstützwand 317 bildende und das Federelement 314 umfassende Hülse 318A bereitgestellt. Vielmehr ist die Hülse 318A nicht vorgesehen. Dann bildet beispielsweise ein Ende 319A der Basiseinheit 301 die Abstützwand 317.

Die Schiebeeinheit 311 weist einen Fortsatz 312 auf, der sich in Richtung der Öffnung 305 des Hohlraums 304A in Form der Ausnehmung der zweiten Verschlusseinheit 300 erstreckt. Der Fortsatz 312 erstreckt sich insbesondere entlang einer Seitenfläche 313 einer magnetischen Einheit 306. Der Fortsatz 312 ist einstückig mit der Schiebeinheit 311 gebildet. Die Seitenfläche 313 der magnetischen Einheit 306 ist beispielsweise senkrecht oder im Wesentlichen senkrecht zu einer ersten Außenseite 308 und/oder zu einer zweiten Außenseite 309 der magnetischen Einheit 306 ausgerichtet.

Die Schiebeeinheit 311 ist entlang des Stegs 307A, welcher die Wandung des Hohlraums 304A in Form der Ausnehmung bildet, in der Ausnehmung in eine Öffnungsposition und in eine Verschlussposition verschiebbar. Mit anderen Worten ausgedrückt, kann die Schiebeeinheit 311 in zwei Positionen bewegt werden, nämlich in eine erste Position in Form einer Öffnungsposition und in eine zweite Position in Form einer Verschlussposition, wobei die Schiebeeinheit 311 beispielsweise entlang der Wandung der Ausnehmung beispielsweise geführt wird.

In der Öffnungsposition der Schiebeeinheit 311 ist das Eingriffsteil 201 der ersten Verschlusseinheit 200 durch die Öffnung 305 in den Hohlraum 304A in Form der Ausnehmung der zweiten Verschlusseinheit 300 einführbar und/oder aufnehmbar. In der Verschlussposition der Schiebeeinheit 311 begrenzt die Schiebeeinheit 311 eine Ausdehnung des Hohlraums 304A in Form der Ausnehmung der zweiten Verschlusseinheit 300. Im Grunde verkleinert die Schiebeeinheit 311 in der Verschlussposition die Ausdehnung des Hohlraums 304A in Form der Ausnehmung derart, dass die Ausdehnung des Hohlraums 304A kleiner ist als das in dem Hohlraum 304A angeordnete Eingriffsteil 201. Ferner liegt in der Verschlussposition der Schiebeeinheit 311, welche die Schließstellung der Verschlussvorrichtung 100 ist, das Eingriffsteil 201 der ersten Verschlusseinheit 200 sowohl an der Wandung des Hohlraums 304A in Form der Ausnehmung der zweiten Verschlusseinheit 300 als auch an der Schiebeeinheit 311 an. Das Eingriffsteil 201 ist dann klemmend zwischen der Wandung des Hohlraums 304A in Form der Ausnehmung der zweiten Verschlusseinheit 300 und der Schiebeeinheit 311 gehalten. Der Fortsatz 312 der Schiebeeinheit 311 ist dazu vorgesehen, in der Verschlussposition der Schiebeeinheit 311 an dem Eingriffsteil 201 der ersten Verschlusseinheit 200 anzuliegen, so dass das Eingriffsteil 201 der ersten Verschlusseinheit 200 klemmend zwischen der Wandung des Hohlraums 304A in Form der Ausnehmung der zweiten Verschlusseinheit 300 und dem Fortsatz 312 der Schiebeeinheit 311 gehalten ist.

Das Eingriffsteil 201 der ersten Verschlusseinheit 200 ist magnetisch ausgebildet. Beispielsweise ist das Eingriffsteil 201 ferromagnetisch ausgebildet. Insbesondere ist es vorgesehen, dass das Eingriffsteil 201 aus Eisen gebildet ist. Ferner ist in dem Hohlraum 304A in Form der Ausnehmung oder an dem Hohlraum 304A in Form der Ausnehmung der zweiten Verschlusseinheit 300 die magnetische Einheit 306 angeordnet, die mit dem magnetisch ausgebildeten Eingriffsteil 201 der ersten Verschlusseinheit 200 zusammenwirkt.

Bei einer Ausführungsform der erfindungsgemäßen Verschlussvorrichtung 100 ist/sind das Eingriffsteil 201 und/oder die magnetische Einheit 306 als Permanentmagnete ausgebildet. Beispielsweise ist/sind das Eingriffsteil 201 und/oder die magnetische Einheit 306 aus einem Magneten gebildet, der zumindest teilweise aus Neodym gebildet ist. Die Erfindung ist aber nicht auf das vorgenannte Material hinsichtlich eines Magneten eingeschränkt. Vielmehr sind für die erfindungsgemäße Verschlussvorrichtung 100 jegliche magnetischen Materialien verwendbar, welche für die Erfindung geeignet sind.

Die magnetische Einheit 306 begrenzt den Hohlraum 304A in Form der Ausnehmung der zweiten Verschlusseinheit 300. Das Eingriffsteil 201 der ersten Verschlusseinheit 200 ist in der Verschlussposition der Schiebeeinheit 311 an der magnetischen Einheit 306 angeordnet. Beispielsweise liegt das Eingriffsteil 201 in der Verschlussposition der Schiebeeinheit 311 an der magnetischen Einheit 306 an. Diese Ausführungsform der Erfindung gewährleistet einen besonders guten Halt des Eingriffsteils 201 der ersten Verschlusseinheit 200 in dem Hohlraum 304A in Form der Ausnehmung der zweiten Verschlusseinheit 300, insbesondere in der Verschlussposition der Schiebeeinheit 311.

Wie oben erwähnt, weist die magnetische Einheit 306 die erste Außenseite 308 und die zweite Außenseite 309 auf. Die erste Außenseite 308 ist zur Öffnung 305 des Hohlraums 304A in Form der Ausnehmung der zweiten Verschlusseinheit 300 gerichtet. Hingegen ist die zweite Außenseite 309 der ersten Außenseite 308 gegenüberliegend angeordnet. Insbesondere ist es vorgesehen, dass die erste Außenseite 308 und die zweite Außenseite 309 der magnetischen Einheit 306 beabstandet zueinander angeordnet sind. Ferner sind in der Verschlussposition der Schiebeeinheit 311 die Schiebeeinheit 311 an der zweite Außenseite 309 und das Eingriffsteil 201 an der ersten Außenseite 308 angeordnet. Insbesondere ist es vorgesehen, dass das Eingriffsteil 201 der ersten Verschlusseinheit 200 an der ersten Außenseite 308 der magnetischen Einheit 306 in der Verschlussposition der Schiebeeinheit 311 anliegt. Ferner weist die Endkappe 303A einen Vorsprung 310A auf, an dem das Eingriffsteil 201 in dem Hohlraum 304A in Form der Ausnehmung in der Verschlussposition der Schiebeeinheit 311 anliegt. Dies ermöglicht einen besonders guten Halt des Eingriffsteils 201, insbesondere wenn dieses halbkugelförmig ausgebildet ist, wie in **Figur 14** dargestellt ist.

Die Ausdehnung des Hohlraums 304A in Form der Ausnehmung der zweiten Verschlusseinheit 300 ist größer als die Ausdehnung der Öffnung 305 der zweiten Verschlusseinheit 300. Dabei ist die Ausdehnung des Hohlraums 304A in Form der Ausnehmung durch den Abstand zweier sich gegenüberliegender Punkte der Wandung der Ausnehmung gegeben, wobei der Abstand die Länge einer Geraden ist, die senkrecht zu einer Längsachse ausgerichtet ist, wobei die Längsachse durch die Ausnehmung und durch die Öffnung 305 der zweiten Verschlusseinheit 300 verläuft. Ferner ist die Ausdehnung der Öffnung 305 durch den Abstand zweier sich gegenüberliegender Punkte der Begrenzung der Öffnung 305 gegeben, wobei der Abstand die Länge einer Geraden ist, die senkrecht zu einer Längsachse ausgerichtet ist, wobei die Längsachse durch den Hohlraum 304A in Form der Ausnehmung und durch die Öffnung 305 der zweiten Verschlusseinheit 300 verläuft. Beispielsweise ist die Öffnung 305 kreisförmig und/oder zylinderförmig ausgebildet. Zusätzlich oder alternativ hierzu ist es vorgesehen, dass der Hohlraum 304A in Form der Ausnehmung zylinderförmig ausgebildet ist. Wenn der Querschnitt des Hohlraums 304A in Form der Ausnehmung und der Querschnitt der Öffnung 305 kreisförmig ausgebildet sind, ist es bei dieser Ausführungsform der erfindungsgemäßen Verschlussvorrichtung 100 vorgesehen, dass der Durchmesser des Hohlraums 304A in Form der Ausnehmung größer als der Durchmesser der Öffnung 305 ist. Der Durchmesser des Hohlraums 304A in Form der Ausnehmung wird in der Verschlussposition der Schiebeeinheit 311 verringert, sodass der Durchmesser des Hohlraums 304A in Form der Ausnehmung kleiner als die Ausdehnung des Eingriffsteils 201 ist. Das Eingriffsteil 201 ist dann in dem Hohlraum 304A in Form der Ausnehmung der zweiten Verschlusseinheit 300 sicher gehalten. Das Eingriffsteil 201 weist beispielsweise eine erste abgeschrägte Fläche 320A auf, die mit einer zweiten abgeschrägten Fläche 321A, die an dem Vorsprung 310A angeordnet ist, ausschließlich in der Verschlussposition der Schiebeeinheit 311 zusammenwirkt. Diese Ausbildung bewirkt ein gutes Abfangen von entstehenden Kräften. In der Öffnungsposition der Schiebeeinheit 311 entfernt sich die erste abgeschrägte Fläche 320A sofort von der zweiten abgeschrägten Fläche 321A.

Es ist vorgesehen, dass in der Verschlussposition der Schiebeeinheit 311 ein kugelförmiges Eingriffsteil 201 drehbar in dem Hohlraum 304A in Form der Ausnehmung gehalten ist. Wie oben bereits ausgeführt, ist es bei einer Ausführungsform der erfindungsgemäßen Verschlussvorrichtung 100 zusätzlich oder alternativ vorgesehen, dass das Eingriffsteil 201 aus Eisen gebildet ist.

Die erfindungsgemäße Verschlussvorrichtung 100 ist in zahlreichen Bereichen des täglichen Lebens verwendbar. Wenn ein Gegenstand, beispielsweise ein Zubehörteil, ein Ausrüstungsgegenstand und/oder ein Werkzeug, nicht zur ständigen Befestigung an einer Person und/oder einem weiteren Gegenstand vorgesehen ist, wird mittels der erfindungsgemäßen Verschlussvorrichtung 100 eine einfache und zuverlässige sowie lösbare Befestigung des Gegenstands an der Person und/oder dem weiteren Gegenstand bereitgestellt. Beispielsweise dient die erfindungsgemäße Verschlussvorrichtung 100 zur lösbaren Befestigung von Ausrüstungsgegenständen beispielsweise an einem Fahrrad, an einem Rollstuhl oder an einem Kinderwagen. Auch bei Hundeleinen, in der Takellage von Segelschiffen, bei der Befestigung von Segeln beim Surfen oder beim Kiten ist die erfindungsgemäße Verschlussvorrichtung 100 verwendbar. Ferner ist die erfindungsgemäße Verschlussvorrichtung 100 auch zur lösbaren Befestigung von Werkzeugen beispielsweise an Tragwesten geeignet. Auch in der Bautechnik ist die erfindungsgemäße Verschlussvorrichtung 100 zur lösbaren Befestigung von Seilen zur Führung von Bauteilen verwendbar. Die vorgenannte Aufzählung von Verwendungen der erfindungsgemäßen Verschlussvorrichtung 100 ist nicht abschließend zu verstehen, sondern nur beispielhaft. Demnach ist die erfindungsgemäße Verschlussvorrichtung 100 für jegliche Anwendung verwendbar, für welche die erfindungsgemäße Verschlussvorrichtung 100 geeignet ist, insbesondere im Bereich des Sports, der Seefahrt, der Tierwelt und der Industrie.

Sämtliche oben genannten, miteinander in Verbindung stehenden Bauteile können beispielsweise miteinander verschraubt oder verschweißt werden. Die Erfindung ist aber auf derartige Verbindungen nicht eingeschränkt. Vielmehr ist jede Verbindung denkbar, welche für die Erfindung geeignet ist.

Die Formen und Dimensionen der oben genannten Bauteile sind je nach Anwendungsbereich wählbar.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

Insbesondere kann/können die erfindungsgemäße Verschlussvorrichtung, insbesondere die erste Verschlusseinheit und/oder die zweite Verschlusseinheit mehr Komponenten oder auch weniger Komponenten aufweisen, als oben beschrieben.

### Bezugszeichenliste

- 100: Verschlussvorrichtung

- 200: erste Verschlusseinheit
- 201: kugelförmiges Eingriffsteil
- 202: erste Halteeinrichtung
- 203: zylinderförmiger Stab
- 204: Kugelkopf
- 205: Längsachse
- 206: Drehachse

- 300: zweite Verschlusseinheit
- 301: Basiseinheit
- 302: zweite Halteeinrichtung
- 303: Wandung der Basiseinheit, gleichzeitig Wandung der Ausnehmung
- 303A: Endkappe
- 304: Ausnehmung
- 304A: Hohlraum (Ausnehmung)
- 305: Öffnung
- 306: magnetische Einheit
- 307: Wandungsausnehmung
- 307A: Steg
- 308: erste Außenseite der magnetischen Einheit
- 309: zweite Außenseite der magnetischen Einheit
- 310: Basisteil
- 310A: Vorsprung
- 311: Schiebeeinheit
- 312: Fortsatz der Schiebeeinheit
- 313: Seitenfläche der magnetischen Einheit
- 314: Federelement
- 315: erstes Ende des Federelements
- 316: zweites Ende des Federelements
- 317: Abstützwand
- 318: Rotationsachse
- 318A: Hülse
- 319: erstes Ende der Basiseinheit
- 319A: Ende
- 320: zweites Ende der Basiseinheit
- 320A: erste abgeschrägte Fläche
- 321: Innenraum
- 321A: zweite abgeschrägte Fläche
- 322: Schlitzführungen
- 323: Stifte
- 324: zweite Betätigungseinrichtung
- 325: erste Betätigungseinrichtung
- 326: Deckeleinheit
- 327: Öffnung
- 328: Führungseinrichtung
- 329: Schiebeeinrichtung

- D1: Ausdehnung der Ausnehmung
- D2: Ausdehnung der Öffnung

## Patentansprüche

1. Verschlussvorrichtung (100) zum lösbaren Verbinden eines ersten Teils mit einem zweiten Teil, mit
- einer ersten Verschlusseinheit (200), wobei die erste Verschlusseinheit (200) ein kugelförmiges Eingriffsteil (201) und eine an dem kugelförmigen Eingriffsteil (201) angeordnete erste Halteeinrichtung (202) zur Anordnung des ersten Teils aufweist, und mit
- einer zweiten Verschlusseinheit (300), die eine zweite Halteeinrichtung (302) zur Anordnung des zweiten Teils und eine durch eine Wandung (303, 307A) begrenzte Ausnehmung (304, 304A) zur Aufnahme des kugelförmigen Eingriffsteils (201) der ersten Verschlusseinheit (200) aufweist, wobei die Ausnehmung (304, 304A) der zweiten Verschlusseinheit (300) eine Öffnung (305) zur Einführung des kugelförmigen Eingriffsteils (201) der ersten Verschlusseinheit (200) aufweist und wobei das kugelförmige Eingriffsteil (201) der ersten Verschlusseinheit (200) zum Schließen der Verschlussvorrichtung (100) in der Ausnehmung (304) der zweiten Verschlusseinheit (300) in einer Schließstellung der Verschlussvorrichtung (100) gehalten ist,
wobei
- eine Schiebeeinheit (311) in der Ausnehmung (304, 304A) der zweiten Verschlusseinheit (300) angeordnet ist, wobei die Schiebeeinheit (311) in Richtung der Öffnung (305) der Ausnehmung (304, 304A) der zweiten Verschlusseinheit (300) vorgespannt ist, wobei die Schiebeeinheit (311) entlang der Wandung (303, 307A) der Ausnehmung (304, 304A) der zweiten Verschlusseinheit (300) in der Ausnehmung (304, 304A) der zweiten Verschlusseinheit (300) in eine Öffnungsposition und eine Verschlussposition verschiebbar ist,
- in der Öffnungsposition der Schiebeeinheit (311) das kugelförmige Eingriffsteil (201) der ersten Verschlusseinheit (200) durch die Öffnung (305) der Ausnehmung (304, 304A) der zweiten Verschlusseinheit (300) in die Ausnehmung (304, 304A) der zweiten Verschlusseinheit (300) aufnehmbar ist,
- in der Verschlussposition der Schiebeeinheit (311) die Schiebeeinheit (311) eine Ausdehnung (D1) der Ausnehmung (304, 304A) der zweiten Verschlusseinheit (300) begrenzt,
- in der Verschlussposition der Schiebeeinheit (311) und in der Schließstellung der Verschlussvorrichtung (100) das kugelförmige Eingriffsteil (201) der ersten Verschlusseinheit (200) sowohl an der Wandung (303, 307A) der Ausnehmung (304, 304A) der zweiten Verschlusseinheit (300) als auch an der Schiebeeinheit (311) anliegt und klemmend zwischen der Wandung (303, 307A) der Ausnehmung (304, 304A) der zweiten Verschlusseinheit (300) und der Schiebeeinheit (311) gehalten ist,
- das kugelförmige Eingriffsteil (201) der ersten Verschlusseinheit (200) magnetisch ausgebildet ist,
- in der Ausnehmung (304, 304A) eine magnetische Einheit (306) angeordnet ist, die mit dem magnetisch ausgebildeten Eingriffsteil (201) der ersten Verschlusseinheit (200) zusammenwirkt,
- die magnetische Einheit (306) eine erste Außenseite (308) und eine zweite Außenseite (309) aufweist,
- die erste Außenseite (308) zur Öffnung (305) der Ausnehmung (304, 304A) gerichtet ist,
- die zweite Außenseite (309) der ersten Außenseite (308) gegenüberliegend angeordnet ist,
- in der Verschlussposition der Schiebeeinheit (311) die Schiebeeinheit (311) an der zweiten Außenseite (309) angeordnet ist,
- die Schiebeeinheit (311) einen Fortsatz (312) aufweist, der sich entlang einer Seitenfläche (313) der magnetischen Einheit (306) in Richtung der Öffnung (305) der Ausnehmung (304, 304A) erstreckt, und wobei
- die zweite Verschlusseinheit (300) eine Wandungsausnehmung (307) aufweist, in welcher die magnetische Einheit (306) angeordnet ist.

2. Verschlussvorrichtung (100) nach Anspruch 1, wobei das Eingriffsteil (201) stabförmig ausgebildet ist.

3. Verschlussvorrichtung (100) nach Anspruch 1 oder 2, wobei in der Verschlussposition der Schiebeeinheit (311) das kugelförmige Eingriffsteil (201) der ersten Verschlusseinheit (200) in der Ausnehmung (304, 304A) drehbar gehalten ist.

4. Verschlussvorrichtung (100) nach Anspruch 3, wobei
- das kugelförmige Eingriffsteil (201) der ersten Verschlusseinheit (200) eine sich in Richtung der ersten Halteeinrichtung (202) erstreckende Längsachse (205) aufweist, und wobei
- das kugelförmige Eingriffsteil (201) der ersten Verschlusseinheit (200) um die Längsachse (205) drehbar in der Ausnehmung (304, 304A) gehalten ist.

5. Verschlussvorrichtung (100) nach Anspruch 3 oder 4, wobei die Verschlussvorrichtung (100) eines der folgenden Merkmale aufweist:
- das kugelförmige Eingriffsteil (201) der ersten Verschlusseinheit (200) ist entlang einer Mantelfläche eines Kegels drehbar in der Ausnehmung (304, 304A) gehalten, wobei eine Drehachse (206) des kugelförmigen Eingriffsteils (201) durch eine Spitze des Kegels verläuft;
- das kugelförmige Eingriffsteil (201) der ersten Verschlusseinheit (200) ist entlang einer Mantelfläche eines Kegels drehbar in der Ausnehmung (304, 304A) gehalten, wobei eine Drehachse (206) des kugelförmigen Eingriffsteils (201) durch eine Spitze des Kegels verläuft, wobei die Spitze des Kegels an einer kugelförmigen Ausbildung (204) des kugelförmigen Eingriffsteils (201) angeordnet ist.

6. Verschlussvorrichtung (100) nach einem der vorangehenden Ansprüche, wobei
- die magnetische Einheit (306) die Ausnehmung (304, 304A) der zweiten Verschlusseinheit (300) begrenzt, und wobei
- das kugelförmige Eingriffsteil (201) in der Verschlussposition der Schiebeeinheit (311) an der magnetischen Einheit (306) angeordnet ist.

7. Verschlussvorrichtung (100) nach einem der vorangehenden Ansprüche, wobei
- die zweite Verschlusseinheit (300) ein Federelement (314) aufweist,
- das Federelement (314) ein erstes Ende (315) und ein zweites Ende (316) aufweist,
- das erste Ende (315) des Federelements (314) sich an der Schiebeeinheit (311) abstützt, und wobei
- das zweite Ende (316) des Federelements (314) sich an einer Abstützwand (317) der zweiten Verschlusseinheit (300) abstützt.

8. Verschlussvorrichtung (100) nach Anspruch 7, wobei die Abstützwand (317) an der zweiten Halteeinrichtung (302) zur Anordnung des zweiten Teils angeordnet ist.

9. Verschlussvorrichtung (100) nach Anspruch 7 oder 8, wobei
- die Schiebeeinheit (311) an einer ersten Betätigungseinrichtung (325) angeordnet ist, und wobei
- die erste Betätigungseinrichtung (325) an der Abstützwand (317) angeordnet ist.

10. Verschlussvorrichtung (100) nach einem der vorangehenden Ansprüche, wobei
- die Schiebeeinheit (311) an einer zweiten Betätigungseinrichtung (324) angeordnet ist, und wobei
- die zweite Betätigungseinrichtung (324) an einer Außenseite der zweiten Verschlusseinheit (300) angeordnet ist.

11. Verschlussvorrichtung (100) nach einem der vorangehenden Ansprüche, wobei die Ausdehnung (D1) der Ausnehmung (304) der zweiten Verschlusseinheit (300) größer ist als eine Ausdehnung (D2) der Öffnung (305) der zweiten Verschlusseinheit (300).

12. Verschlussvorrichtung (100) nach einem der vorangehenden Ansprüche, wobei die zweite Verschlusseinheit (300) hülsenförmig ausgebildet ist.

13. Verschlussvorrichtung (100) nach einem der vorangehenden Ansprüche, wobei das kugelförmige Eingriffsteil (201) aus Eisen gebildet ist,

14. Verschlussvorrichtung (100) nach einem der Ansprüche 1 bis 8, wobei
- die Schiebeeinheit (311) an einer Betätigungseinrichtung angeordnet ist, und wobei
- die Betätigungseinrichtung als Druckschalter zur Umlenkung einer Kraft zur Bewegung der Schiebeeinheit (311) ausgebildet ist.

15. Verschlussvorrichtung (100) nach Anspruch 3, wobei
- in der Verschlussposition der Schiebeeinheit (311) das Eingriffsteil (201) an der ersten Außenseite (308) angeordnet ist,
- an einem Ende der zweiten Verschlusseinheit (300) eine Endkappe (303A) angeordnet ist,
- die Endkappe (303A) einen Hohlraum (304A) aufweist, der die Ausnehmung bildet,
- eine den Hohlraum (304A) der Endkappe (303A) umgebende Wand (307A) die Wandung der Ausnehmung bildet, und wobei
- die Endkappe (303A) die Öffnung (305) aufweist.

16. Verschlussvorrichtung (100) nach Anspruch 15, mit mindestens einem der folgenden Merkmale:
- die Endkappe (303A) weist mindestens einen Steg (307A) auf, welcher in die zweite Verschlusseinheit (300) hineinragt und welcher die den Hohlraum (304A) umgebende Wand (307A) bildet;
- das Eingriffsteil (201) weist eine erste abgeschrägte Fläche (320A) auf, wobei ein in die Ausnehmung (304A) ragender Vorsprung (310A) der Endkappe (303) eine zweite abgeschrägte Fläche (321A) aufweist, wobei die erste abgeschrägte Fläche (320A) mit der zweiten abgeschrägten Fläche (321A) ausschließlich in der Verschlussposition der Schiebeeinheit (311) zusammenwirkt;
- die Schiebeeinheit (311) ist einstückig mit dem Fortsatz (312) ausgebildet.

## Claims

1. Closing device (100) for releasably connecting a first part to a second part, having
- a first closing unit (200), the first closing unit (200) comprising a spherical engaging part (201) and a first retaining device (202) arranged at the spherical engaging part (201) for attaching the first part, and having
- a second closing unit (300), which has a second retaining device (302) for attaching the second part and a cut out (304, 304A) which is delimited by a wall (303, 307A) for receiving the spherical engaging part (201) of the first closing unit (200), the cut out (304, 304A) of the second closing unit (300) having an opening (305) for inserting the spherical engaging part (201) of the first closing unit (200), and the spherical engaging part (201) of the first closing unit (200) is held in a closed position of the closing device (100) for the closing of the closing device (100) in the cut out (304) of the second closing unit (300),
wherein
- a sliding unit (311) is located in the cut out (304, 304A) of the second closing unit (300), said sliding unit (311) being preloaded in the direction of the opening (305) of the cut out (304, 304A) of the second closing unit (300), wherein the sliding unit (311) can be moved into an open position and a closed position along the wall (303, 307A) of the cut out (304, 304A) of the second closing unit (300) in the cut out (304, 304A) of the second closing unit (300),
- in the open position of the sliding unit (311), the spherical engaging part (201) of the first closing unit (200) can be received in the cut out (304, 304A) of the second closing unit (300) through the opening (305) of the cut out (304, 304A) of the second closing unit (300),
- in the closed position of the sliding unit (311), the sliding unit (311) delimits an extension (D1) of the cut out (304, 304A) of the second closing unit (300),
- in the closed position of the sliding unit (311) and in the closed position of the closing device (100), the spherical engaging part (201) of the first closing unit (200) lies against both the wall (303, 307A) of the cut out (304, 304A) of the second closing unit (300) and against the sliding unit (311) and is held clamped between the wall (303, 307A) of the cut out (304, 304A) of the second closing unit (300) and the sliding unit (311),
- the spherical engaging part (201) of the first closing unit (200) is magnetic,
- a magnetic unit (306) is arranged in the cut out (304, 304A), which interacts with the magnetically formed engaging part (201) of the first closing unit (200),
- the magnetic unit (306) comprises a first outer side (308) and a second outer side (309),
- the first outer side (308) is oriented toward the opening (305) of the cut out (304, 304A),
- the second outer side (309) is situated opposite the first outer side (308),
- in the closed position of the sliding unit (311), the sliding unit (311) is arranged at the second outer side (309),
- the sliding unit (311) has a prolongation (312), which extends along a side surface (313) of the magnetic unit (306) in the direction of the opening (305) of the cut out (304, 304A), and wherein
- the second closing unit (300) comprises a wall cut out (307), in which the magnetic unit (306) is arranged.

2. Closing device (100) as claimed in claim 1, wherein the engaging part (201) is rod-shaped.

3. Closing device (100) as claimed in claim 1 or 2, wherein in the closed position of the sliding unit (311) the spherical engaging part (201) of the first closing unit (200) is held in the cut out (304, 304A) in rotatable manner.

4. Closing device (100) as claimed in claim 3, wherein
- the spherical engaging part (201) of the first closing unit (200) has a longitudinal axis (205) extending in the direction of the first retaining device (202), and wherein
- the spherical engaging part (201) of the first closing unit (200) is held in the cut out (304, 304A) rotatably about the longitudinal axis (205).

5. Closing device (100) as claimed in claim 3 or 4, wherein the closing device (100) has one of the following features:
- the spherical engaging part (201) of the first closing unit (200) is held in the cut out (304, 304A) rotatably along an envelope surface of a cone, and a rotational axis (206) of the spherical engaging part (201) runs through an apex of the cone;
- the spherical engaging part (201) of the first closing unit (200) is held in the cut out (304, 304A) rotatably along an envelope surface of a cone, and a rotational axis (206) of the spherical engaging part (201) runs through an apex of the cone, the apex of the cone being arranged at a spherical formation (204) of the spherical engaging part (201).

6. Closing device (100) as claimed in one of preceding claims, wherein
- the magnetic unit (306) delimits the cut out (304, 304A) of the second closing unit (300), and wherein
- the spherical engaging part (201) is arranged in the closed position of the sliding unit (311) at the magnetic unit (306).

7. Closing device (100) as claimed in one of the preceding claims, wherein
- the second closing unit (300) comprises a spring element (314),
- the spring element (314) has a first end (315) and a second end (316),
- the first end (315) of the spring element (314) is braced against the sliding unit (311), and wherein
- the second end (316) of the spring element (314) is braced against a support wall (317) of the second closing unit (300).

8. Closing device (100) as claimed in claim 7, wherein the support wall (317) is arranged at the second retaining device (302) for the mounting of the second part.

9. Closing device (100) as claimed in claim 7 or 8, wherein
- the sliding unit (311) is arranged at a first activating device (325), and
wherein
- the first activating device (325) is arranged at the support wall (317).

10. Closing device (100) as claimed in one of the preceding claims, wherein
- the sliding unit (311) is arranged at a second activating device (324), and wherein
- the second activating device (324) is arranged at an outer side of the second closing unit (300).

11. Closing device (100) as claimed in one of the preceding claims, wherein the extension (D1) of the cut out (304) of the second closing unit (300) is larger than an extension (D2) of the opening (305) of the second closing unit (300).

12. Closing device (100) as claimed in one of the preceding claims, wherein the second closing unit (300) is sleeve-shaped.

13. Closing device (100) as claimed in one of the preceding claims, wherein the spherical engaging part (201) is made of iron.

14. Closing device (100) as claimed in one of the claims 1 to 8, wherein
- the sliding unit (311) is arranged at an activating device, and wherein
- the activating device is configured as a pressure switch for redirecting a force to move the sliding unit (311).

15. Closing device (100) as claimed in claim 3, wherein
- in the closed position of the sliding unit (311), the engaging part (201) is arranged at the first outer side (308),
- at one end of the second closing unit (300) there is arranged an end cap (303A),
- the end cap (303A) has a cavity (304A), which forms the cut out,
- a wall (307A) encircling the cavity (304A) of the end cap (303A) forms the wall of the cut out, and wherein
- the end cap (303A) comprises the opening (305).

16. Closing device (100) as claimed in claim 15, with at least one of the following features:
- the end cap (303A) comprises at least one bar (307A), which protrudes into the second closing unit (300) and forms the wall (307A) encircling the cavity (304A);
- the engaging part (201) has a first beveled surface (320A), and a protrusion (310A) of the end cap (303) protruding into the cut out (304A) has a second beveled surface (321A), the first beveled surface (320A) interacting with the second beveled surface (321A) only in the closed position of the sliding unit (311);
- the sliding unit (311) is formed as a single piece with the prolongation (312).

## Revendications

1. Dispositif de verrouillage (100) pour la liaison séparable entre une première pièce et une deuxième pièce, comprenant
- une première unité de verrouillage (200), la première unité de verrouillage (200) étant munie d'un organe d'engagement sphérique (201) et d'un premier système de retenue (202) agencé sur l'organe d'engagement sphérique (201) pour la disposition de la première pièce, et comprenant
- une deuxième unité de verrouillage (300) qui est munie d'un deuxième système de retenue (302) pour la disposition de la deuxième pièce et d'une cavité (304, 304A) délimitée par une paroi (303, 307A) pour recevoir l'organe d'engagement sphérique (201) de la première unité de verrouillage (200), la cavité (304, 304A) de la deuxième unité de verrouillage (300) présentant une ouverture (305) pour l'introduction de l'organe d'engagement sphérique (201) de la première unité de verrouillage (200) et l'organe d'engagement sphérique (201) de la première unité de verrouillage (200) étant maintenu dans la cavité (304) de la deuxième unité de verrouillage (300) dans une position verrouillée du dispositif de verrouillage (100),
dans lequel
- une unité coulissante (311) est disposée dans la cavité (304, 304A) de la deuxième unité de verrouillage (300), l'unité coulissante (311) étant pré-contrainte dans le sens de l'ouverture (305) de la cavité (304, 304A) de la deuxième verrouillage unité (300), l'unité coulissante (311) pouvant coulisser le long de la paroi (303, 307A) de la cavité (304, 304A) de la deuxième unité de verrouillage (300) dans la cavité (304, 304A) de la deuxième unité de verrouillage (300) dans une position d'ouverture et une position de verrouillage,
- dans la position d'ouverture de l'unité coulissante (311), l'organe d'engagement sphérique (201) de la première unité de verrouillage (200) peut être accueilli à travers l'ouverture (305) de la cavité (304, 304A) de la deuxième unité de verrouillage (300) dans la cavité (304, 304A) de la deuxième unité de verrouillage (300),
- dans la position de verrouillage de l'unité coulissante (311), l'unité coulissante (311) limite une étendue (D1) de la cavité (304, 304A) de la deuxième unité de verrouillage (300),
- dans la position de verrouillage de l'unité coulissante (311) et dans la position fermée du dispositif de verrouillage (100), l'organe d'engagement sphérique (201) de la première unité de verrouillage (200) repose aussi bien contre la paroi (303, 307A) de la cavité (304, 304A) de la deuxième unité de verrouillage (300) que contre l'unité coulissante (311) et est maintenu par serrage entre la paroi (303, 307A) de la cavité (304, 304A) de la deuxième unité de verrouillage (300) et l'unité coulissante (311),
- l'organe d'engagement sphérique (201) de la première unité de verrouillage (200) est magnétique,
- une unité magnétique (306) est agencée dans la cavité (304, 304A) et coopère avec l'organe d'engagement magnétique (201) de la première unité de verrouillage (200),
- l'unité magnétique (306) possède une première face extérieure (308) et une deuxième face extérieure (309),
- la première face extérieure (308) est dirigée vers l'ouverture (305) de la cavité (304, 304A),
- la deuxième face extérieure (309) est disposée à l'opposé de la première face extérieure (308),
- en position verrouillée de l'unité coulissante (311), l'unité coulissante (311) est disposée sur la deuxième face extérieure (309),
- l'unité coulissante (311) présente une extension (312) qui s'étend le long d'une face latérale (313) de l'unité magnétique (306) en direction de l'ouverture (305) de la cavité (304, 304A), et
- la deuxième unité de verrouillage (300) présente une cavité de paroi (307) dans laquelle l'unité magnétique (306) est agencée.

2. Dispositif de verrouillage (100) selon la revendication 1, dans lequel l'organe d'engagement (201) est en forme de tige.

3. Dispositif de verrouillage (100) selon la revendication 1 ou 2, dans lequel dans la position verrouillée de l'unité coulissante (311) l'organe d'engagement sphérique (201) de la première unité de verrouillage (200) est maintenu en rotation dans la cavité (304, 304A).

4. Dispositif de verrouillage (100) selon la revendication 3, dans lequel
- l'organe d'engagement sphérique (201) de la première unité de verrouillage (200) possède un axe longitudinal (205) s'étendant dans la direction du premier système de retenue (202), et dans lequel
- l'organe d'engagement sphérique (201) de la première unité de verrouillage (200) est maintenu en rotation autour de l'axe longitudinal (205) dans la cavité (304, 304A).

5. Dispositif de verrouillage (100) selon la revendication 3 ou 4, le dispositif de verrouillage (100) présentant l'une des caractéristiques suivantes :
- l'organe d'engagement sphérique (201) de la première unité de verrouillage (200) est maintenu en rotation le long d'une surface latérale d'un cône dans la cavité (304, 304A), un axe de rotation (206) de l'organe d'engagement sphérique (201) traversant une pointe du cône ;
- l'organe d'engagement sphérique (201) de la première unité de verrouillage (200) est maintenu en rotation le long d'une surface latérale d'un cône dans la cavité (304, 304A), un axe de rotation (206) de l'organe d'engagement sphérique (201) traversant une pointe du cône, la pointe du cône étant agencée sur une formation sphérique (208) de l'organe d'engagement sphérique (201).

6. Dispositif de verrouillage (100) selon l'une des revendications précédentes, dans lequel
- l'unité magnétique (306) délimite la cavité (304, 304A) de la deuxième unité de verrouillage (300), et dans lequel
- l'organe d'engagement sphérique (201) est agencé sur l'unité magnétique (306) dans la position verrouillée de l'unité coulissante (311).

7. Dispositif de verrouillage (100) selon l'une des revendications précédentes, dans lequel
- la deuxième unité de verrouillage (300) possède un élément ressort (314),
- l'élément ressort (314) possède une première extrémité (315) et une deuxième extrémité (316),
- la première extrémité (315) de l'élément ressort (314) prend appui sur l'unité coulissante (311), et dans lequel
- la deuxième extrémité (316) de l'élément ressort (314) prend appui sur une paroi de support (317) de la deuxième unité de verrouillage (300).

8. Dispositif de verrouillage (100) selon la revendication 7, la paroi de support (317) étant disposée sur le deuxième système de retenue (302) pour disposer la deuxième pièce.

9. Dispositif de verrouillage (100) selon la revendication 7 ou 8, dans lequel
- l'unité coulissante (311) est agencée sur un premier dispositif d'actionnement (325), et dans lequel
- le premier dispositif d'actionnement (325) est disposé sur la paroi de support (317).

10. Dispositif de verrouillage (100) selon l'une des revendications précédentes, dans lequel
- l'unité coulissante (311) est agencée sur un deuxième dispositif d'actionnement (324), et dans lequel
- le deuxième dispositif d'actionnement (324) est agencé sur une face extérieure de la deuxième unité de verrouillage (300).

11. Dispositif de verrouillage (100) selon l'une des revendications précédentes, dans lequel l'étendue (D1) de la cavité (304) de la deuxième unité de verrouillage (300) est supérieure à une étendue (D2) de l'ouverture (305) de la deuxième unité de verrouillage (300).

12. Dispositif de verrouillage (100) selon l'une des revendications précédentes, la deuxième unité de verrouillage (300) étant en forme de manchon.

13. Dispositif de verrouillage (100) selon l'une des revendications précédentes, l'organe d'engagement sphérique (201) étant réalisé en fer.

14. Dispositif de verrouillage (100) selon l'une des revendications 1 à 8, dans lequel
- l'unité coulissante (311) est agencée sur un dispositif d'actionnement, et dans lequel
- le dispositif d'actionnement est conçu comme un pressostat pour dévier une force pour déplacer l'unité coulissante (311).

15. Dispositif de verrouillage (100) selon la revendication 3, dans lequel
- dans la position verrouillée de l'unité coulissante (311), l'organe d'engagement sphérique (201) est disposé sur la première face extérieure (308),
- un capuchon d'extrémité (303A) est disposé à une extrémité de la deuxième unité de verrouillage (300),
- le capuchon d'extrémité (303A) possède un évidement (304A) qui forme la cavité,
- une paroi (307A) entourant l'évidement (304A) du capuchon d'extrémité (303A) forme la paroi de la cavité, et dans lequel
- le capuchon d'extrémité (303A) possède l'ouverture (305).

16. Dispositif de verrouillage (100) selon la revendication 15, présentant au moins l'une des caractéristiques suivantes :
- le capuchon d'extrémité (303A) possède au moins un pont (307A) qui fait saillie dans la deuxième unité de verrouillage (300) et qui forme la paroi (307A) entourant la cavité (304A) ;
- l'organe d'engagement (201) possède une première surface biseautée (320A), dans laquelle une saillie (310A) du capuchon d'extrémité (303) faisant saillie dans la cavité (304A) possède une deuxième surface biseautée (321A), la première surface biseautée (320A) coopérant avec la deuxième surface biseautée (321A) uniquement en position verrouillée de l'unité coulissante (311) ;
- l'unité coulissante (311) est formée d'une seule pièce avec l'extension (312).
